(19) Europäisches Patentamt
European Patent Office
Office européen des brevets

(11) **EP 4 730 430 A1**

(12) **EUROPEAN PATENT APPLICATION**

(43) Date of publication:
**22.04.2026 Bulletin 2026/17**

(21) Application number: **25204840.0**

(22) Date of filing: **26.09.2025**

(51) International Patent Classification (IPC):
$H01M\ 4/36^{(2006.01)}$      $H01M\ 4/505^{(2010.01)}$
$H01M\ 4/525^{(2010.01)}$      $H01M\ 10/0525^{(2010.01)}$
$H01M\ 10/0562^{(2010.01)}$

(52) Cooperative Patent Classification (CPC):
H01M 4/366; H01M 4/505; H01M 4/525;
H01M 10/0525; H01M 10/0562

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **15.10.2024 JP 2024180242**

(71) Applicant: **TOYOTA JIDOSHA KABUSHIKI KAISHA**
**Toyota-shi, Aichi-ken 471-8571 (JP)**

(72) Inventors:
• **Yoshida, Jun**
  **Toyota-shi, Aichi-ken,, 471-8571 (JP)**
• **Morimoto, Masahiro**
  **Toyota-shi, Aichi-ken,, 471-8571 (JP)**

(74) Representative: **Winter, Brandl - Partnerschaft mbB**
  **Alois-Steinecker-Straße 22**
  **85354 Freising (DE)**

(54) **COMPOSITE ACTIVE MATERIAL, BATTERY, AND MANUFACTURING METHODS FOR SAME**

(57)      Disclosed is a composite active material having high capacity and low resistance. The composite active material of the present disclosure comprises an active material particle and a coating portion. The active material particle has an O2-type structure. The active material particle comprises, as constituent elements, Li; at least one transition metal element among Mn, Ni, and Co; and O. The active material particle is tabular. The coating portion covers at least a portion of a surface of the active material particle. The coating portion comprises a sulfide solid electrolyte.

# FIG. 1

EP 4 730 430 A1

**Description**

TECHNICAL FIELD

The present application discloses a composite active material, a battery, and manufacturing methods therefor.

BACKGROUND ART

PTL 1 discloses an electrode active material having an O2-type structure (O: Octahedral). An electrode active material having an O2-type structure can be obtained by subjecting at least a portion of Na in a Na-containing oxide having a P2-type structure to ion exchange with Li.

CITATION LIST

PATENT LITERATURE

PTL 1 Japanese Unexamined Patent Publication (Kokai) No. 2022-085829

SUMMARY

TECHNICAL PROBLEM

Electrode active materials having an O2-type structure have room for improvement in terms of capacity and resistance.

SOLUTION TO PROBLEM

The present application discloses the following plurality of aspects as means for achieving the above object.

<Aspect 1>

A composite active material, comprising an active material particle and a coating portion, wherein

the active material particle has an O2-type structure,
the active material particle comprises, as constituent elements,
Li,
at least one transition metal element among Mn, Ni, and Co, and
O,
the active material particle is tabular,
the coating portion covers at least a portion of a surface of the active material particle, and the coating portion comprises a sulfide solid electrolyte.

<Aspect 2>

The composite active material according to Aspect 1, wherein
coverage of the coating portion relative to the surface of the active material particle is 50% or greater.

<Aspect 3>

The composite active material according to Aspect 1 or 2, wherein

the active material particle comprises a protective layer on a surface thereof, wherein
at least a portion of a surface of the protective layer is covered by the coating portion, and the protective layer comprises, as constituent elements, Li, B, P, and O.

<Aspect 4>

The composite active material according to any of Aspects 1 to 3, wherein

the active material particle comprises, as constituent elements, Li, Mn, Ni, Co, and O.

<Aspect 5>

The composite active material according to any of Aspects 1 to 4, wherein

an active material constituting the active material particle has a chemical composition
represented by $Li_aNa_bMn_{x-p}Ni_{y-q}Co_{z-r}M_{p+q+r}O_2$ (where $0 < a \le 1.40$; $0 \le b \le 0.20$; $x + y + z = 1$; and $0 \le p + q + r < 0.17$,
and element M is at least one selected from B, Mg, Al, K, Ca, Ti, V, Cr, Fe, Cu, Zn, Ga, Ge, Sr, Y, Zr, Nb, Mo, and W).

<Aspect 6>

A battery, comprising a positive electrode active material layer, an electrolyte layer, and a negative electrode
active material layer, wherein
the positive electrode active material layer comprises the composite active material according to any of Aspects 1 to 5.

<Aspect 7>

The battery according to Aspect 6, wherein
the electrolyte layer comprises a solid electrolyte.

<Aspect 8>

A manufacturing method for a composite active material, comprising

obtaining an active material particle, and
covering at least a portion of a surface of the active material particle with a coating portion, wherein
the active material particle has an O2-type structure,
the active material particle comprises, as constituent elements, Li, at least one transition metal element among Mn, Ni,
and Co, and O,
the active material particle is tabular, and
the coating portion comprises a sulfide solid electrolyte.

<Aspect 9>

A manufacturing method for a battery, comprising

manufacturing the composite active material by the method according to Aspect 8,
mixing at least the composite active material, an electrolyte, a conductive aid, and a binder to obtain an electrode
mixture,
using the electrode mixture to obtain a positive electrode active material layer,
obtaining an electrolyte layer comprising an electrolyte, and
obtaining a negative electrode active material layer comprising a negative electrode active material.

ADVANTAGEOUS EFFECTS OF INVENTION

The composite active material of the present disclosure has high capacity and low resistance.

BRIEF DESCRIPTION OF DRAWINGS

FIG. 1 schematically shows one example of a configuration of the inside (cross-section) of a composite active material.
FIG. 2 is a schematic view for describing a method of specifying an aspect ratio of the cross-sectional shape of an
active material particle.
FIG. 3 shows one example of a layered state of tabular active material particles in an electrode.
FIG. 4 shows one example of the flow of a manufacturing method for a composite active material.
FIG. 5 schematically shows one example of a configuration of a battery.

FIG. 6 shows one example of the flow of a manufacturing method for a battery.
FIG. 7 is an SEM-EDX image of a cross-section of the composite active material according to Example 1.

DESCRIPTION OF EMBODIMENTS

Hereinafter, one embodiment of each of the composite active material, the battery, and the manufacturing methods therefor of the present disclosure will be described. However, the composite active material, the battery, and the manufacturing methods therefor of the present disclosure are not limited to the embodiments described below.

1. Composite active material

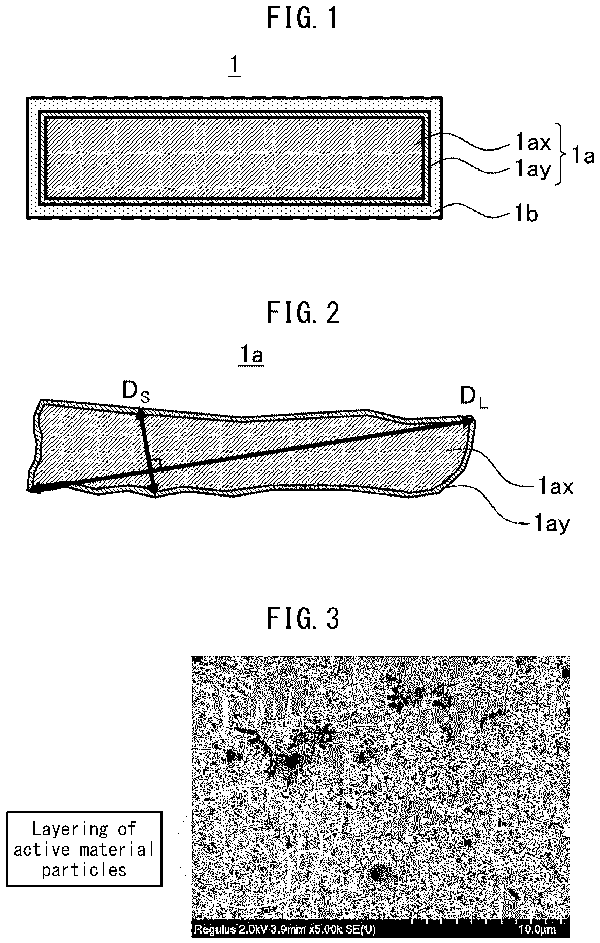

As shown in FIG. 1, the composite active material 1 according to one embodiment comprises an active material particle 1a and a coating portion 1b. The active material particle 1a has an O2-type structure. The active material particle 1a comprises, as constituent elements, Li; at least one transition element among Mn, Ni, and Co; and O. The active material particle 1a is tabular. The coating portion 1b covers at least a portion of a surface of the active material particle 1a. The coating portion 1b comprises a sulfide solid electrolyte.

1.1 Active material particle

The active material particle 1a has an O2-type structure. The active material particle 1a comprises, as constituent elements, Li; at least one transition metal element among Mn, Ni, and Co; and O. In addition, the active material particle 1a is tabular. As shown in FIG. 1, the active material particle 1a according to one embodiment may have on the surface thereof a protective layer 1ay. In other words, the active material particle 1a may comprise an active material portion 1ax inside thereof and a protective layer lay covering at least a portion of the surface of the active material portion 1ax. The presence of the protective layer 1ay is optional. However, when the active material particle 1a has on the surface thereof a protective layer 1ay, the resistance in the composite active material 1 is likely to be more remarkably improved. When the active material particle 1a comprises an active material portion 1ax and a protective layer 1ay, the active material portion 1ax has an O2-type structure, and comprises, as constituent elements, Li; at least one transition metal element among Mn, Ni, and Co; and O.

1.1.1 Crystal structure of active material

The active material particle 1a has an O2-type structure (belong to space group P63mc). When the active material particle 1a comprises an active material portion 1ax and a protective layer 1ay, the active material portion 1ax has an O2-type structure. The active material particle 1a according to one embodiment may have an O2-type structure and a crystal structure other than an O2-type structure in the active material portion 1ax. Examples of the crystal structure other than an O2-type structure include a T#2-type structure (belonging to space group Cmca) and an O6-type structure (belonging to space group R-3m, with a c-axis length of 2.5 nm or more and 3.5 nm or less, typically 2.9 nm or more and 3.0 nm or less, and differing from an O3-type structure belonging to the same space group R-3m), formed when Li is deintercalated from an O2-type structure. The active material particle 1a according to one embodiment, in the active material portion 1ax, may have an O2-type structure as the main phase, or may have a crystal structure (for example, O6-type structure) other than an O2-type structure as the main phase. The active material particle 1a according to one embodiment can have, depending on the charge and discharge states thereof, a crystal structure for the main phase that changes. The active material portion 1ax in the active material particle 1a according to one embodiment may be a single crystal consisting of one crystallite, or may be a polycrystal having a plurality of crystallites.

1.1.2 Chemical composition of active material

The active material particle 1a comprises, as constituent elements, Li; at least one transition metal element among Mn, Ni, and Co; and O. In the active material particle 1a, particularly when the constituent elements include Li, Mn, one or both of Ni and Co, and O, especially when the constituent elements include Li, Mn, Ni, Co, and O, higher performance is easily obtained. When the active material particle 1a comprises an active material portion 1ax and a protective layer 1ay, the active material portion 1ax may comprise, as constituent elements, Li; at least one transition metal element among Mn, Ni, and Co; and O, may comprise Li, Mn, one or both of Ni and Co, and O, or may comprise Li, Mn, Ni, Co, and O. The active material particle 1a may comprise additional elements other than Li, Mn, Ni, Co, and O.
The active material constituting the active material particle 1a may have a chemical composition represented by $Li_aNa_bMn_{x-p}Ni_{y-q}Co_{z-r}M_{p+q+r}O_2$ (where $0 < a \leq 1.40$; $0 \leq b \leq 0.20$; $x + y + z = 1$; and $0 \leq p + q + r < 0.17$, and the element M is at least one selected from B, Mg, Al, K, Ca, Ti, V, Cr, Fe, Cu, Zn, Ga, Ge, Sr, Y, Zr, Nb, Mo, and W). When the active material portion 1ax has such a chemical composition, high performance is easily ensured, and an O2-type structure is easily maintained. In the chemical composition above, a is greater than 0 and may be 0.10 or greater, 0.20 or greater, 0.30 or greater, 0.40 or greater, 0.50 or greater, or 0.60 or greater, and is 1.40 or less and may be 1.30 or less, 1.20 or less, 1.10 or less, 1.00 or less, 0.90 or less, 0.80 or less, or 0.70 or less. In the chemical composition above, b is 0 or greater and may be 0.01 or greater, 0.02 or greater, or 0.03 or greater, and is 0.20 or less and may be 0.15 or less, or 0.10 or less. In addition, x is 0 or greater and may be 0.10 or greater, 0.20 or greater, 0.30 or greater, or 0.40 or greater, and is 1.00 or less and may be 0.90 or less, 0.80 or less, 0.70 or less, 0.60 or less, 0.50 or less, or 0.40 or less. Further, y is 0 or greater and may be 0.10 or greater or 0.20 or greater, and is 1.00 or less and may be 0.90 or less, 0.80 or less, 0.70 or less, 0.60 or less, 0.50 or less, 0.40 or less, 0.30 or less, or 0.20 or less. Moreover, z is 0 or greater and may be 0.10 or greater, 0.20 or greater, 0.30 or greater, or 0.40 or greater, and is 1.00 or less and may be 0.90 or less, 0.80 or less, 0.70 or less, 0.60 or less, 0.50 or less, or 0.40 or less. The element M has a small contribution towards charging and discharging. In this regard, in the above chemical composition, by having $p + q + r$ less than 0.17, high charge and discharge capacities are easily ensured. $p + q + r$ may be 0.16 or less, 0.15 or less, 0.14 or less, 0.13 or less, 0.12 or less, 0.11 or less, or 0.10 or less. By including the element M, an O2-type structure is easily stabilized. In the above chemical composition, $p + q + r$ is 0 or greater and may be 0.01 or greater, 0.02 or greater, 0.03 or greater, 0.04 or greater, 0.05 or greater, 0.06 or greater, 0.07 or greater, 0.08 or greater, 0.09 or greater, or 0.10 or greater. The composition of O is approximately 2, but is variable.

### 1.1.3 Protective layer

As shown in FIG. 1, the active material particle 1a may have on the surface thereof a protective layer 1ay. In this case, at least a portion of the surface of the protective layer 1ay can be covered by a coating portion 1b. In one embodiment, the protective layer 1ay may comprise, as constituent elements, Li, B, P, and O. When the protective layer 1ay comprises Li, B, P, and O as constituent elements, the resistance in the composite active material 1 is likely to be further improved. Alternatively, the protective layer 1ay may have a different chemical composition.

The protective layer 1ay may consist of a Li ion-conducting material. Specifically, the protective layer 1ay may inhibit the active material portion 1ax of the active material particle 1a from directly contacting the coating portion 1b described below and be able to ensure a Li ion conduction path between the active material portion 1ax and the coating portion 1b. The Li ion-conducting material may be an inorganic compound or an organic compound, but particularly in the case of an inorganic compound, high performance is easily ensured. The protective layer 1ay may comprise substantially no organic compound (content of organic compound being less than 0.01% by mass).

When the protective layer 1ay is composed of an inorganic compound having Li ion-conducting properties, the inorganic compound, for example, may be at least one selected from Li-containing oxides and Li-containing halides. Particularly in the case of a Li-containing oxide, especially when the constituent elements include Li, B, P, and O, as described above, high performance is easily ensured. In the case where the protective layer 1ay comprises Li, B, P, and O as constituent elements, the proportion of Li contained in the protective layer 1ay, for example, may be 20 mol% or greater and 50 mol% or less. The proportion of P contained in the protective layer 1ay, for example, may be 5 mol% or greater and 20 mol% or less. The molar ratio (B/P) of B relative to P contained in the protective layer 1ay, for example, may be 0.5 or greater and 2.0 or less. The molar ratio (Li/(P + B)) of Li relative to the total of P and B contained in the protective layer 1ay, for example, may be 0.3 or greater and 1.2 or less. The proportions of these elements, for example, can be determined by elemental analysis via SEM-EDX or by ICP analysis. The proportion of O contained in the protective layer 1ay, for example, can be determined as oxygen concentration by a heating-melting method. For the protective layer 1ay, the oxygen concentration determined by a heating-melting method, for example, may be 45% by weight or greater and 60% by weight or less. The proportion of O contained in the protective layer 1ay, for example, may be 30 mol% or greater and 60 mol% or less.

The Li-containing oxide constituting the protective layer 1ay may be an oxide comprising Li and an element A other than Li. The Li-containing oxide may comprise at least one element A selected from B, C, Al, Si, P, S, Ti, La, Zr, Nb, Mo, Zn, and W; Li; and O. Particularly, when the element A includes B and P, higher performance is easily ensured. The Li-containing oxide may be an oxynitride comprising N. More specifically, the Li-containing oxide may be at least one selected from $Li_3BO_3$, $LiBO_2$, $Li_2CO_3$, $LiAlO_2$, $Li_4SiO_4$, $Li_2SiO_3$, $Li_3PO_4$, $Li_2SO_4$, $Li_2TiO_3$, $Li_4Ti_5O_{12}$, $Li_2Ti_2O_5$, $Li_2ZrO_3$, $LiNbO_3$, $Li_2MoO_4$, $Li_2WO_4$, LiPON, Li-B-P-O, $Li_2O$-$LaO_2$, and $Li_2O$-$ZnO_2$. The Li-containing oxide may have a portion of elements substituted by various doping elements.

The Li-containing halide constituting the protective layer 1ay, for example, may be at least one of various compounds exemplified as a halide solid electrolyte described below. The Li-containing halide, for example, may comprise at least one element selected from the group consisting of Mg, Ca, Sr, Ba, Zn, Sn, Al, Sc, Ga, Bi, Sb, Zr, Hf, Ti, Ta, Nb, W, Y, Gd, Tb, and Sm; at least one halogen element selected from the group consisting of Cl, Br, I, and F; and Li. The Li-containing halide may comprise at least one selected from the group consisting of Ti, Al, Gd, Ca, Zr, and Y; at least one selected from the group consisting of Cl, Br, I, and F; and Li. The Li-containing halide may comprise at least one element selected from the group consisting of Ti and Al; at least one element selected from the group consisting of Cl, Br, I, and F;

and Li. The Li-containing halide, for example, may be a composite halide of Li, Ti, Al, and F.

The protective layer 1ay can cover a portion or all of the surface of the active material portion 1ax. The protective layer 1ay, for example, may cover 70% by area or more, 80% by area or more, 90% by area or more, 95% by area or more, or 99% by area or more of the surface of the active material portion 1ax. The coverage of the protective layer 1ay relative to the active material portion 1ax can be determined by carrying out an elemental analysis of a cross-section of the active material particle 1a (or composite active material 1).

The thickness of the protective layer 1ay, for example, may be 0.1 nm or more and 100 nm or less, or 1 nm or more and 50 nm or less. The thickness of the protective layer 1ay can be determined by observing a cross-section of the active material particle 1a via a scanning electron microscope (SEM) or a transmission electron microscope (TEM).

1.1.4 Shape of active material particle

The active material particle 1a is tabular. The active material particle 1a, as described below, can be obtained via ion exchange of Na in a Na-containing oxide having a P2-type structure with Li. The P2-type structure has a hexagonal crystal system and a large Na ion diffusion coefficient, and crystal growth easily occurs in a specific direction. Particularly, when a transition metal element constituting the P2-type structure includes at least one among Mn, Ni, and Co, tabular crystals are easily grown in a specific direction. Therefore, for the Na-containing oxide having a P2-type structure, a tabular particle having a large aspect ratio, wherein crystal growth direction is biased in a specific direction, is easily obtained. The active material particle 1a according to one embodiment may be obtained based on such a tabular Na-containing oxide particle.

In the present application, the active material particle 1a being "tabular" means that a predetermined cross-sectional shape of the active material particle 1a has an aspect ratio of 1.2 or greater. The "aspect ratio" of the cross-sectional shape of the active material particle 1a is measured as described below. Specifically:

(1) A plurality of composite active materials 1 are press-molded together with resin and metal powder to obtain a sample for cross-sectional observation (alternatively, an electrode comprising the composite active material 1 may be used as the sample for cross-sectional observation). The sample is subjected to cross-sectional processing using a cross-section preparation apparatus (ion milling apparatus: IM4000II, manufactured by Hitachi, Ltd.). The cross-section is oriented along the pressure application direction during press molding.

(2) The sample that has been subjected to cross-section processing is mounted on a FE-SEM, and the cross-section is observed.

(3) An elemental mapping analysis (oxygen, sulfur) of the cross-section of the composite active material 1 is carried out using an EDX manufactured by Oxford Instruments, and using an EDX analysis software (AZtecLive) developed by Oxford Instruments, an elemental mapping of each element is obtained.

(4) The cross-sectional shape of the active material particle is identified from the obtained mapping region of O K$\alpha$1.

(5) In the cross-sectional shape identified, the maximum Feret diameter is determined and regarded as a "long diameter" of the active material particle 1a. For example, as shown in FIG. 2, the long diameter $D_L$ of the cross-sectional shape of the active material particle 1a is identified.

(6) Among the line segments each connecting two points on the periphery of the cross-sectional shape identified and perpendicular to the "long diameter" identified in (5), the longest line segment is regarded as the "short diameter" of the active material particle 1a. For example, as shown in FIG. 2, the short diameter $D_S$ of the cross-sectional shape of the active material particle 1a is identified.

(7) The ratio (long diameter/short diameter) of the "long diameter" and the "short diameter" determined is regarded as the "aspect ratio" of the predetermined cross-sectional shape of the active material particle 1a, and when the "aspect ratio" is 1.2 or greater, the active material particle 1a is regarded as "tabular". The upper limit of the aspect ratio is not particularly limited. The aspect ratio, for example, may be 10.0 or less. In one embodiment, the aspect ratio may be 1.2 or greater and 10.0 or less, 1.3 or greater and 10.0 or less, 1.5 or greater and 10.0 or less, 1.7 or greater and 10.0 or less, 2.0 or greater and 10.0 or less, 2.5 or greater and 10.0 or less, 3.0 or greater and 10.0 or less, 3.5 or greater and 10.0 or less, 4.0 or greater and 10.0 or less, 4.5 or greater and 10.0 or less, or 5.0 or greater and 10.0 or less.

The particle size of the active material particle 1a is not particularly limited. The average particle size (D50) of the active material particles 1a may be 0.1 $\mu$m or more and 10 $\mu$m or less, 1.0 $\mu$m or more and 8.0 $\mu$m or less, 2.0 $\mu$m or more and 6.0 or less, or 2.0 $\mu$m or more and 4.0 $\mu$m or less. The average particle size (D50) is a 50% cumulative particle diameter (D50, median diameter) in a volume-based particle size distribution by a laser diffraction or scattering method. The active material particle 1a according to one embodiment may be a positive electrode active material particle.

1.2 Coating portion

When forming an electrode using the active material particle, pressure is sometimes applied to the electrode for the purpose of densifying the electrode. According to the findings of the present inventors, in an electrode wherein tabular active material particles are adopted, when pressure is applied to the electrode, as shown in FIG. 3, flat surfaces (wide surfaces) of the tabular active material particles tend to result in a layered state. Therefore, pressure cannot be evenly applied to the electrode, and interface formation between active material particles or interface formation between an active material particle and another battery material (such as electrolyte) is sometimes insufficient. The active material having an O2-type structure has a large volume change in the high SOC region. Therefore, in a battery using an active material having an O2-type structure, due to the volume change of the active material in the high SOC region, interface formation between active material particles or interface formation between an active material particle and another battery material (such as electrolyte) is sometimes insufficient. If interface formation is insufficient as such, interruption of Li ion conduction path is likely to occur, leading to a decrease in capacity and an increase in resistance.

In the present embodiment, in order to suppress interruption in the Li ion conduction path at the interface between the above active material particles or the interface between the active material particle and another battery material, at least a portion of the surface of the active material particle 1a is covered with the coating portion 1b. Since the coating portion 1b comprises a sulfide solid electrolyte, a Li ion conduction path at the interface between the active material particle 1a and the coating portion 1b is ensured. In an electrode using such a composite active material 1, the coating portion 1b is interposed between active material particles 1a or between an active material particle 1a and another battery material. Therefore, at the interface between active material particles or the interface between an active material particle and another battery material (such as electrolyte), a Li ion conduction path is ensured by the coating portion 1b, and capacity and resistance are easily improved.

1.2.1 Sulfide solid electrolyte

The coating portion 1b comprises a sulfide solid electrolyte. The sulfide solid electrolyte may be a glass-based sulfide solid electrolyte (sulfide glass), may be a glass-ceramic-based sulfide solid electrolyte, or may be a crystal-based sulfide solid electrolyte. The sulfide glass is amorphous. The sulfide glass may have a glass transition temperature (Tg). When the sulfide solid electrolyte has a crystal phase, examples of the crystal phase include Thio-LISICON-type crystal phase, LGPS-type crystal phase, and argyrodite-type crystal phase.

The sulfide solid electrolyte, for example, may contain, as constituent elements, Li, X (X is at least one of P, As, Sb, Si, Ge, Sn, B, Al, Ga, and In), and S. In one embodiment, the sulfide solid electrolyte may comprise, as constituent elements, Li, S, and P. In addition, the sulfide solid electrolyte may further contain, as constituent elements, at least one of O and a halogen. Further, the sulfide solid electrolyte may contain S as an anionic element main component.

The sulfide solid electrolyte, for example, may be at least one selected from $Li_2S$-$P_2S_5$, $Li_2S$-$P_2S_5$-LiI, $Li_2S$-$P_2S_5$-$GeS_2$, $Li_2S$-$P_2S_5$-$Li_2O$, $Li_2S$-$P_2S_5$-$Li_2O$-LiI, $Li_2S$-$P_2S_5$-LiI-LiBr, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (where m and n are positive numbers, and Z is any of Ge, Zn, and Ga), $Li_2S$-$GeS_2$, $Li_2S$-$SiS_2$-$Li_3PO_4$, and $Li_2S$-$SiS_2$-$Li_xMO_y$ (where x and y are positive numbers, and M is any of P, Si, Ge, B, Al, Ga, and In).

The composition of the sulfide solid electrolyte is not particularly limited. Examples thereof include $xLi_2S \cdot (100 - x)P_2S_5$ ($70 \leq x \leq 80$) and $yLiI \cdot zLiBr \cdot (100 - y - z)(xLi_2S \cdot (1 - x)P_2S_5)$ ($0.7 \leq x \leq 0.8$, $0 \leq y \leq 30$, and $0 \leq z \leq 30$). Alternatively, the sulfide solid electrolyte may have a composition represented by general formula: $Li_{4-x}Ge_{1-x}P_xS_4$ ($0 < x < 1$). In the above general formula, at least a portion of Ge may be substituted with at least one of Sb, Si, Sn, B, Al, Ga, In, Ti, Zr, V, and Nb. In the above general formula, at least a portion of P may be substituted with at least one of Sb, Si, Sn, B, Al, Ga, In, Ti, Zr, V, and Nb. In the above general formula, a portion of Li may be substituted with at least one of Na, K, Mg, Ca, and Zn. In the above general formula, a portion of S may be substituted with a halogen (at least one of F, Cl, Br, and I). Alternatively, the sulfide solid electrolyte may have a composition represented by $Li_{7-a}PS_{6-a}X_a$ (X is at least one of Cl, Br, and I, and a is a number of 0 or greater and 2 or less). a may be 0, or may be greater than 0. In the latter case, a may be 0.1 or greater, may be 0.5 or greater, or may be 1 or greater. In addition, a may be 1.8 or less, or may be 1.5 or less.

The proportion of the sulfide solid electrolyte to the coating portion 1b, for example, may be 70% by mass or greater and 100% by mass or less, 80% by mass or greater and 100% by mass or less, 90% by mass or greater and 100% by mass or less, 95% by mass or greater and 100% by mass or less, or 99% by mass or greater and 100% by mass or less.

1.2.2 Additional component

The coating portion 1b may comprise an additional component in addition to the sulfide solid electrolyte. The proportion of the additional component to the coating portion 1b, for example, may be 0% by mass or greater and 30% by mass or less, 0% by mass or greater and 20% by mass or less, 0% by mass or greater and 10% by mass or less, 0% by mass or greater and 5% by mass or less, or 0% by mass or greater and 1% by mass or less. The additional component, for example, may be a solid electrolyte other than a sulfide solid electrolyte. The solid electrolyte other than a sulfide solid electrolyte may be an inorganic solid electrolyte, or may be an organic polymer electrolyte. Examples of the inorganic solid electrolyte include oxide solid electrolytes and inorganic solid electrolytes having ion-binding properties.

The oxide solid electrolyte may be one or more selected from lithium lanthanum zirconate, LiPON, $Li_{1+x}Al_xGe_{2-x}(PO_4)_3$, Li-SiO-based glass, and Li-Al-S-O-based glass.

The solid electrolyte having ion-binding properties, for example, may comprise at least one element selected from the group consisting of Mg, Ca, Sr, Ba, Zn, Sn, Al, Sc, Ga, Bi, Sb, Zr, Hf, Ti, Ta, Nb, W, Y, Gd, Tb, and Sm. These elements can generate cations in water. The ion-binding solid electrolyte material, for example, may comprise at least one halogen element selected from the group consisting of Cl, Br, I, and F. These elements can generate anions in water. The solid electrolyte having ion-binding properties may comprise at least one selected from the group consisting of Gd, Ca, Zr, and Y, at least one selected from the group consisting of Cl, Br, I, and F, and Li. The solid electrolyte having ion-binding properties comprises Li and Y, and may comprise at least one selected from the group consisting of Cl, Br, I, and F. More specifically, the solid electrolyte having ion-binding properties may comprise Li, Y, Cl, and Br, may comprise Li, Ca, Y, Gd, Cl, and Br, or may comprise Li, Zr, Y, and Cl. Even more specifically, the solid electrolyte having ion-binding properties may be at least one of $Li_3YBr_2Cl_4$, $Li_{2.8}Ca_{0.1}Y_{0.5}Gd_{0.5}Br_2Cl_4$, and $Li_{2.5}Y_{0.5}Zr_{0.5}Cl_6$.

The solid electrolyte having ion-binding properties may be a halide solid electrolyte. A halide solid electrolyte has excellent ion-conducting properties. The halide solid electrolyte may have a composition represented by, for example, formula (A):

$$Li_\alpha M_\beta X_\gamma \ ... \qquad (A)$$

where $\alpha$, $\beta$, and y are each independently a value greater than 0, M is at least one selected from the group consisting of metal elements other than Li and semimetal elements, and X is at least one selected from the group consisting of Cl, Br, and I. Note that a "semimetal element" may be at least one selected from the group consisting of B, Si, Ge, As, Sb, and Te. Further, a "metal element" may include (i) all of the elements contained from Group 1 to Group 12 of the periodic table (excluding hydrogen) and (ii) all of the elements contained from Group 13 to Group 16 of the periodic table (excluding B, Si, Ge, As, Sb, Te, C, N, P, O, S, and Se). A metal element can form an inorganic compound with halide ions and form cations.

In the formula (A), M may comprise Y (i.e., yttrium). A halide solid electrolyte comprising Y may have a composition represented by $Li_aMe_bY_cX_6$ (where $a + mb + 3c = 6$, $c > 0$, Me is at least one selected from the group consisting of metal elements and semimetal elements other than Li and Y, and m is the valence of Me). Me, for example, may be at least one selected from the group consisting of Mg, Ca, Sr, Ba, Zn, Sc, Al, Ga, Bi, Zr, Hf, Ti, Sn, Ta, and Nb.

The halide solid electrolyte may have a composition represented by formula (A1): $Li_{6-3d}Y_dX_6$. In the formula (A1), X is one or more elements selected from the group consisting of Cl, Br, and I. d may satisfy $0 < d < 2$, or may be d = 1. The halide solid electrolyte may have a composition represented by formula (A2): $Li_{3-3\delta}Y_{1+\delta}Cl_6$. In the formula (A2), $\delta$ may be $0 < \delta \le 0.15$. The halide solid electrolyte may have a composition represented by formula (A3): $Li_{3-3\delta}Y_{1+\delta}Br_6$. In the formula (A3), $\delta$ may be $0 < \delta \le 0.25$. The halide solid electrolyte may have a composition represented by formula (A4): $Li_{3-3\delta+a}Y_{1+\delta-a}Me_aCl_{6-x-y}Br_xI_y$. In the formula (A4), Me may be at least one selected from the group consisting of Mg, Ca, Sr, Ba, and Zn. In the formula (A4), for example, $-1 < \delta < 2$, $0 < a < 3$, $0 < (3 - 3\delta + a)$, $0 < (1 + \delta - a)$, $0 \le x \le 6$, $0 \le y \le 6$, and $(x + y) \le 6$ are satisfied. The halide solid electrolyte may have a composition represented by formula (A5): $Li_{3-3\delta}Y_{1+\delta-a}Me_aCl_{6-x-y}Br_xI_y$. In the formula (A5), Me may be at least one selected from the group consisting of Al, Sc, Ga, and Bi. In the formula (A5), the variables may satisfy $-1 < \delta < 1$, $0 < a < 2$, $0 < (1 + \delta - a)$, $0 \le x \le 6$, $0 \le y \le 6$, and $(x + y) \le 6$. The halide solid electrolyte may have a composition represented by formula (A6): $Li_{3-3\delta-a}Y_{1+\delta-a}Me_aCl_{6-x-y}Br_xI_y$. In the formula (A6), Me may be at least one selected from the group consisting of Zr, Hf, and Ti. In the formula (A6), the variables may satisfy $-1 < \delta < 1$, $0 < a < 1.5$, $0 < (3 - 3\delta - a)$, $0 < (1 + \delta - a)$, $0 \le x \le 6$, $0 \le y \le 6$, and $(x + y) \le 6$. The halide solid electrolyte may have a composition represented by formula (A7): $Li_{3-3\delta-2a}Y_{1+\delta-a}Me_aCl_{6-x-y}Br_xI_y$. In the formula (A7), Me may be at least one selected from the group consisting of Ta and Nb. In the formula (A7), the variables may satisfy $-1 < \delta < 1$, $0 < a < 1.2$, $0 < (3 - 3\delta - 2a)$, $0 < (1 + \delta - a)$, $0 \le x \le 6$, $0 \le y \le 6$, and $(x + y) \le 6$.

The solid electrolyte having ion-binding properties may be a complex hydride solid electrolyte. The complex hydride solid electrolyte can be composed of Li ions and complex ions comprising H. The complex ion comprising H, for example, may comprise an element M comprising at least one of nonmetal elements, semimetal elements, and metal elements and H bonded to the element M. In the complex ion comprising H, an element M as a central element and H surrounding the element M may be bonded to each other via a covalent bond. The complex ion comprising H may be represented by $(M_mH_n)^{\alpha-}$. In this case, m can be any positive number, and n and $\alpha$ can take on any positive number depending on m and the valence of the element M. The element M needs only to be any nonmetal element or metal element that can form a complex ion. For example, the element M may comprise at least one of B, C, and N as a nonmetal element, or may comprise B. Further, for example, the element M may comprise at least one of Al, Ni, and Fe as a metal element. Particularly, when the complex ion comprises B or comprises C and B, higher ion-conducting properties are easily ensured. Specific examples of the complex ion comprising H include $(CB_9H_{10})^-$, $(CB_{11}H_{12})^-$, $(B_{10}H_{10})^{2-}$, $(B_{12}H_{12})^{2-}$, $(BH_4)^-$, $(NH_2)^-$, $(AlH_4)^-$, and combinations thereof. Particularly, when $(CB_9H_{10})^-$, $(CB_{11}H_{12})^-$, or a combination thereof is used, higher ion-conducting properties are easily ensured. Specifically, the complex hydride solid electrolyte may comprise Li, C, B, and H.

### 1.2.3 Coverage

The coating portion 1b covers at least a portion of the surface of the active material particle 1a. It is considered that the higher the coverage of the coating portion 1b relative to the surface of the active material particle 1a, the more the interface formation ability described above is increased and the more the capacity and resistance are improved. The coverage of the coating portion 1b relative to the surface of the active material particle 1a, for example, may be 50% or greater, 60% or greater, 70% or greater, 80% or greater, 90% or greater, or 95% or greater. The upper limit of the coverage is not particularly limited. The coverage may be 100% or less. The "coverage" of the coating portion 1b relative to the surface of the active material particle 1a is measured as follows. Specifically:

(1) A plurality of composite active materials 1 are press-molded together with resin and metal powder to obtain a sample for cross-sectional observation (alternatively, an electrode comprising the composite active material 1 may be used as the sample for cross-sectional observation). The sample is subjected to cross-sectional processing using a cross-section preparation apparatus (ion milling apparatus: IM4000II, manufactured by Hitachi, Ltd.). The cross-section is oriented along the pressure application direction during press molding.
(2) The sample that has been subjected to cross-section processing is mounted on a FE-SEM, and the cross-section is observed.
(3) An elemental mapping analysis (oxygen, sulfur) of the cross-section of the composite active material 1 is carried out using an EDX manufactured by Oxford Instruments, and using an EDX analysis software (AZtecLive) developed by Oxford Instruments, an elemental mapping of each element is obtained.
(4) The peripheral length of the portion corresponding to the active material particle 1a is calculated from the obtained mapping region of O K$\alpha$1.
(5) The contact length of S K$\alpha$1 in contact with the portion corresponding to the active material particle 1a identified from the mapping region of O K$\alpha$1 is calculated.
(6) Based on the following formula, the coverage of the coating portion 1b relative to the surface of the active material particle 1a is determined.

(Coverage %) = 100 × (contact length of S K$\alpha$1 in contact with O K$\alpha$ 1)/(peripheral length calculated from mapping region of O K$\alpha$1)

(7) The (3) to (6) described above are carried out on 10 randomly selected composite active materials 1, and the average value of coverage is determined.

### 1.2.4 Thickness

The thickness of the coating portion 1b, for example, may be more than 0 $\mu$m and 1.0 $\mu$m or less, or more than 0 $\mu$m and 0.5 $\mu$m or less. The thickness of the coating portion 1b can be determined by an elemental analysis of a cross-section of the composite active material 1, as described above.

### 1.3 Others

#### 1.3.1 Shape of entirety of composite active material

The composite active material 1 comprises the active material particle 1a and the coating portion 1b described above. The composite active material 1 may be particulate as a whole. In addition, a plurality of composite active materials 1 may agglomerate to constitute a secondary particle. The particle size of the composite active material 1 is not particularly limited. The average particle size (D50) of the composite active materials 1 may be 0.1 $\mu$m or more and 10 $\mu$m or less, 1.0 $\mu$m or more and 8.0 $\mu$m or less, or 2.0 $\mu$m or more and 6.0 $\mu$m or less. The average particle size (D50) is a 50% cumulative particle diameter (D50, median diameter) in a volume-based particle size distribution by a laser diffraction or scattering method. The composite active material 1 according to one embodiment may be a positive electrode active material.

1.3.2 Volume ratio of coating portion to active material particle

The volume ratio of the coating portion 1b to the active material particle 1a in the composite active material 1 is not particularly limited. For example, when a ratio V2/V1 of the volume V2 of the coating portion 1b relative to the volume V1 of the active material particle 1a contained in the composite active material 1 is 0.1 or greater and 0.5 or less, or 0.1 or greater and 0.3 or less, a higher resistance improvement effect is easily ensured.

2. Manufacturing method for composite active material

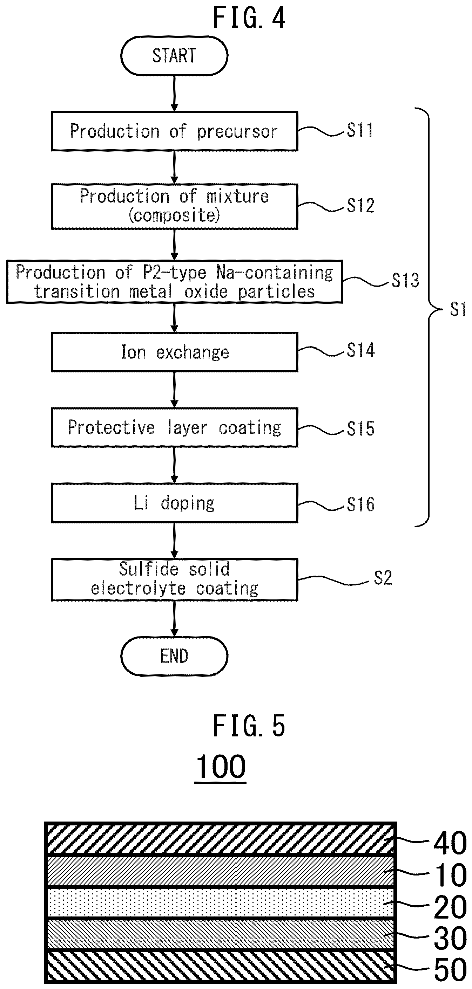

The above composite active material 1, for example, can be manufactured by the following method. Specifically, as shown in FIG. 4, the manufacturing method for the composite active material 1 according to one embodiment comprises

S1: obtaining an active material particle 1a, and
S2: covering at least a portion of the surface of the active material particle 1a with a coating portion 1b.

The active material particle 1a has an O2-type structure. The active material particle 1a comprises, as constituent elements, Li; at least one transition metal element among Mn, Ni, and Co; and O. The active material particle 1a is tabular. The coating portion 1b comprises a sulfide solid electrolyte.

2.1 S1

In S1, an active material particle 1a that has an O2-type structure, comprises predetermined constituent elements, and is tabular, for example, can be obtained by the following method. Specifically, as shown in FIG. 4, S1 may comprise

S11: obtaining a precursor comprising at least one transition metal element among Mn, Ni, and Co,
S12: mixing the precursor and a Na source to obtain a mixture,
S13: firing the mixture to obtain a tabular Na-containing oxide particle having a P2-type structure, and
S14: subjecting at least a portion of Na in the Na-containing oxide particle to ion exchange with Li to obtain a Li-containing oxide particle having an O2-type structure.

2.1.1 Production of precursor

The precursor may at least comprise at least one transition metal among Mn, Ni, and Co. The precursor may comprise at least Mn and one or both of Ni and Co, or may comprise at least Mn, Ni, and Co. The precursor may be a salt comprising at least one element among Mn, Ni, and Co. The precursor, for example, may be at least one of a carbonate, a sulfate, a nitrate, and an acetate. Alternatively, the precursor may be a compound other than a salt. The precursor, for example, may be a hydroxide. The precursor may be a hydrate. The precursor may be a combination of a plurality of compounds. The precursor may be of various shapes. For example, the precursor may be particulate, and may be spherical particles as described below. The particle size of the particles consisting of the precursor is not particularly limited.

In S11, a precipitate as the precursor above may be obtained by a coprecipitation method using an ion source that can form a precipitation with a transition metal ion in an aqueous solution and a transition metal compound comprising at least one element among Mn, Ni, and Co. As a result, spherical particles as the precursor are easily obtained. An "ion source that can form a precipitation with a transition metal ion in an aqueous solution", for example, may be at least one selected from sodium salts such as sodium carbonate and sodium nitrate, sodium hydroxide, and sodium oxide. The transition metal compound may be a salt or hydroxide described above comprising at least one element among Mn, Ni, and Co. Specifically, in S1, the ion source and the transition metal compound may each be formed into a solution, and the solutions may then be dropped and mixed to obtain a precipitate as the precursor. In this case, for example, water is used as a solvent. In this case, various sodium compounds may be used as a base, and ammonia aqueous solution may be added to adjust basicity. In the case of a coprecipitation method, the precipitate as the precursor is obtained, for example, by preparing an aqueous solution of a transition metal compound and an aqueous solution of sodium carbonate and dropping each to mix the aqueous solutions. Alternatively, it is possible to obtain the precursor by a sol-gel method.

In S11, the precursor may comprise an element M. The element M is at least one selected from B, Mg, Al, K, Ca, Ti, V, Cr, Cu, Zn, Ga, Ge, Sr, Y, Zr, Nb, Mo, and W. These elements M, for example, have a function of stabilizing a P2-type structure and an O2-type structure. The method of obtaining a precursor comprising an element M is not particularly limited. When a precursor is obtained by a coprecipitation method in S1, for example, an aqueous solution of a transition metal compound comprising at least one of Mn, Ni, and Co, an aqueous solution of sodium carbonate, and an aqueous solution of a compound of the element M are prepared, the aqueous solutions are each added dropwise and mixed, whereby a precursor comprising at least one element among Mn, Ni, and Co and the element M is obtained. Alternatively, in the manufacturing method of the present disclosure, the element M is not added in S11, and the element M may be doped in S12 and S13 described below.

2.1.2 Production of mixture (composite)

In S12, the precursor obtained via S11 and a Na source are mixed to obtain a mixture. In S12, the surface of the precursor may be covered with the Na source to obtain a composite. The Na source may be a salt comprising Na, such as a carbonate or a nitrate, or may be a compound other than a salt, such as sodium oxide or sodium hydroxide. In S12, the amount of the Na source relative to the precursor may be determined by taking into account the amount of Na lost during subsequent firing. In S12, if the surface of the precursor is covered with a Na source, the coverage of the Na source relative to the surface of the precursor is not particularly limited. In S12, the method of covering the surface of the precursor with the Na source is not particularly limited. For example, the precursor and the Na source may be mixed by a mortar or a mixing apparatus, or a solution comprising the Na source may be brought into contact with the precursor using a rolling fluidized coating method or a spray drying method and then dried.

In S12, the precursor may be mixed with a Na source and an M source. For example, in S12, the precursor obtained via S1, a Na source, and an M source comprising at least one element selected from B, Mg, Al, K, Ca, Ti, V, Cr, Cu, Zn, Ga, Ge, Sr, Y, Zr, Nb, Mo, and W may be mixed to obtain a mixture. The M source, for example, may be a salt comprising an element M, such as a carbonate or a sulfate, or may be a compound other than a salt, such as an oxide or a hydroxide. The amount of the M source relative to the precursor may be determined in accordance with the chemical composition of the Na-containing oxide after firing.

2.1.3 Production of P2-type Na-containing oxide particle

In S13, by firing the mixture (composite) obtained via S12, a Na-containing oxide having a P2-type structure is obtained. The S13 may comprise

S13-1: subjecting the mixture to a pre-firing at a temperature of 300°C or higher and lower than 700°C for 1 h or more and 10 h or less,

S13-2: following the pre-firing, subjecting the mixture to a main firing at a temperature of 700°C or higher and 1100°C or lower for 30 min or more and 48 h or less, and

S13-3: following the main firing, rapidly cooling the composite from a temperature $T_1$ of 200°C or higher to a temperature $T_2$ of 100°C or lower.

In S13-1, the mixture (composite) is subjected to a pre-firing at a temperature of 300°C or higher and lower than 700°C for 2 h or more and 10 h or less. In S13-1, the pre-firing may be carried out after optionally molding the above mixture. The pre-firing is carried out at a temperature lower than that of main firing. When the pre-firing in S13-1 is insufficient, it is possible that generation of a P2 phase in the ultimately obtained Na-containing oxide is insufficient. In S13-1, by setting the pre-firing temperature to 300°C or higher and lower than 700°C and the pre-firing time to 2 h or more and 10 h or less, the mixture can be subjected to a sufficient pre-firing, heat uniformity is improved, and the Na-containing oxide obtained via S13-2 and S13-3 described below is likely a suitable one. The pre-firing temperature may be 400°C or higher and lower than 700°C, 450°C or higher and lower than 700°C, 500°C or higher and lower than 700°C, 550°C or higher and lower than 700°C, or 550°C or higher and 650°C or lower. The pre-firing time may be 2 h or more and 8 h or less, 3 h or more and 8 h or less, 4 h or more and 8 h or less, 5 h or more and 8 h or less, or 5 h or more and 7 h or less. The pre-firing atmosphere is not particularly limited, and for example, may be an oxygen-containing atmosphere.

In S13-2, following the above pre-firing, the mixture (composite) is subjected to a main firing at a temperature of 700°C or higher and 1100°C or lower for 30 min or more and 48 h or less. In S13-2, the main firing temperature may be 800°C or higher and 1000°C or lower. When the main firing temperature is too low, a P2 phase is not generated, and when the main firing temperature is too high, a different phase that is not a P2 phase is easily generated. The heating conditions from the pre-firing temperature to the main firing temperature is not particularly limited. In S13-2, the shape of the Na-containing oxide can be controlled by the main firing time. When the main firing time is too short, generation of the P2 phase is insufficient. In the present embodiment, by setting the main firing time to a certain duration or longer, the P2 phase grows, and a tabular Na-containing particle is obtained.

In S13-3, the fired product after the above main firing undergoes rapid cooling (cooled at a cooling rate of 20°C/min or higher) from a temperature $T_1$ of 200°C or higher to a temperature $T_2$ of 100°C or lower. The above pre-firing and main firing are carried out in, for example, a heating furnace. In the step S13-3, for example, the mixture (composite) is subjected to a main firing in a heating furnace and then cooled to an arbitrary temperature $T_1$ of 200°C or higher in the heating furnace, and after reaching the temperature $T_1$, the fired product is removed from the heating furnace and undergoes rapid cooling outside the furnace to an arbitrary temperature $T_2$ of **100°C** or lower. The temperature $T_1$ is an arbitrary temperature of 200°C or higher, and may be an arbitrary temperature of 250°C or higher. The temperature $T_2$ is an arbitrary temperature of 100°C or lower, and may be an arbitrary temperature of 50°C or lower or may be the cooling end temperature. In the predetermined temperature region from the temperature $T_1$ until reaching the temperature $T_2$, moisture easily infiltrates between layers of a P2-type structure by atomic vibrations or molecular motion. When cooling the fired product (Na-containing oxide having a P2-type structure) after main firing, by shortening the time in the temperature region where such moisture easily infiltrates (i.e., rapid cooling), it is considered that the infiltration amount of moisture between layers of the P2-type structure is decreased. In this regard, in the step S13-3, when cooling the fired product after the main firing, by leaving the fired product to cool from an arbitrary temperature $T_1$ of 200°C or higher until reaching an arbitrary temperature $T_2$ of 100°C or lower in, for example, a dry atmosphere outside the furnace, the cooling rate from the temperature $T_1$ to the temperature $T_2$ is rapid (for example, 20°C/min or higher), moisture does not easily infiltrate between layers of the P2-type structure, and collapse of the P2-type structure can be inhibited. As a result, Na can efficiently undergo ion exchange with Li in S14.

A tabular Na-containing oxide particle having a P2-type structure and having a predetermined chemical composition can be manufactured via S13. The Na-containing oxide particle at least comprises, as constituent elements, at least one transition metal element among Mn, Ni, and Co; Na; and O. Particularly, when the constituent elements at least include Na, Mn, at least one of Ni and Co, and O, especially when the constituent elements include at least Na, Mn, Ni, Co, and O, high performance is easily ensured. The Na-containing oxide particle may have a chemical composition represented by $Na_cMn_{x-p}Ni_{y-q}Co_{z-r}M_{p+q+r}O_2$, where $0 < c < 1.00$, $x + y + z = 1$, and $0 \leq p + q + r < 0.17$. In addition, M is at least one element selected from B, Mg, Al, K, Ca, Ti, V, Cr, Fe, Cu, Zn, Ga, Ge, Sr, Y, Zr, Nb, Mo, and W. When the Na-containing oxide has such a chemical composition, a P2-type structure is more easily maintained. In the above chemical composition, c is greater than 0 and may be 0.10 or greater, 0.20 or greater, 0.30 or greater, 0.40 or greater, 0.50 or greater, or 0.60 or greater, and is less than 1.00 and may be 0.90 or less, 0.80 or less, or 0.70 or less. x is 0 or greater and may be 0.10 or greater, 0.20 or greater, 0.30 or greater, or 0.40 or greater, and is 1.00 or less and may be 0.90 or less, 0.80 or less, 0.70 or less, 0.60 or less, 0.50 or less, or 0.40 or less. y is 0 or greater and may be 0.10 or greater or 0.20 or greater, and is 1.00 or less and may be 0.90 or less, 0.80 or less, 0.70 or less, 0.60 or less, 0.50 or less, 0.40 or less, 0.30 or less, or 0.20 or less. z is 0 or greater and may be 0.10 or greater, 0.20 or greater, 0.30 or greater, or 0.40 or greater, and is 1.00 or less and may be 0.90 or less, 0.80 or less, 0.70 or less, 0.60 or less, 0.50 or less, or 0.40 or less. The element M has a small contribution towards charging and discharging. In this regard, in the above chemical composition, by having p + q + r less than 0.17, high charge and discharge capacities are easily ensured. p + q + r may be 0.16 or less, 0.15 or less, 0.14 or less, 0.13 or less, 0.12 or less, 0.11 or less, or 0.10 or less. By including the element M, P2-type and O2-type structures are easily stabilized. In the above chemical composition, p + q + r is 0 or greater, and may be 0.01 or greater, 0.02 or greater, 0.03 or greater, 0.04 or greater, 0.05 or greater, 0.06 or greater, 0.07 or greater, 0.08 or greater, 0.09 or greater, or 0.10 or greater. The composition of O is approximately 2, but is variable.

2.1.4 Ion exchange

In S14, by subjecting at least a portion of Na in the Na-containing oxide particle obtained via S13 to ion exchange with Li, a Li-containing oxide particle having an O2-type structure is obtained. Ion exchange includes, for example, a method using an aqueous solution comprising a lithium halide and a method using a mixture (for example, a molten salt) of a lithium halide and an additional lithium salt. From the viewpoint that a P2-type structure is easily broken by water infiltration and the viewpoint of crystallinity, of the above two methods, a method using a molten salt is preferable. Specifically, the above Na-containing oxide having a P2-type structure and the molten salt are mixed and heated to a temperature of the melting point of the molten salt or higher, whereby at least a portion of Na in the Na-containing oxide can be substituted with Li by ion exchange. The lithium halide constituting the molten salt is preferably at least one of lithium chloride, lithium bromide, and lithium iodide. An additional lithium salt constituting the molten salt is preferably lithium nitrate. By using a molten salt, the melting point is lowered compared to when the lithium halide and the additional lithium salt are used independently, and ion exchange at a lower temperature is possible. The temperature of the ion exchange, for example, may be the melting point of the above molten salt or higher and 600°C or lower, 500°C or lower, 400°C or lower, or 300°C or lower. When the temperature of the ion exchange is too high, an O3-type structure, which is a stable phase, not an O2-type structure, is easily generated. From the viewpoint of shortening the time required for the ion exchange, the temperature of the ion exchange is preferably as high as possible.

2.1.5 Protective layer coating

The manufacturing method for the active material particle 1a according to one embodiment, for example, may comprise

S15: covering at least a portion of the surface of the ion-exchanged Li-containing oxide particle described above or the Li-containing oxide particle further doped with Li described below with a protective layer.

As a result, the active material particle 1a comprising an active material portion 1ax and a protective layer 1ay as shown in FIG. 1 is obtained.

In S15, the method of covering at least a portion of the surface of the Li-containing oxide particle as the active material portion 1ax with a protective layer 1ay is not particularly limited. For example, the raw material constituting the protective layer 1ay is dissolved in a solvent to prepare a coating solution, and the solvent is volatilized and removed while the coating solution is brought into contact with the surface of the Li-containing oxide particle or after having been brough into contact therewith, thereby allowing at least a portion of the Li-containing oxide particle as the active material portion 1ax to be covered with the protective layer 1ay. In one embodiment, the Li-containing oxide particle and the coating solution are mixed to prepare a slurry, and then the slurry is heated to volatilize the solvent, whereby the active material particle 1a comprising the active material portion 1ax and the protective layer 1ay may be obtained. In the heating and drying of the slurry, for example, spray drying can be adopted.

2.1.6 Li doping

The manufacturing method for the active material particle 1a according to one embodiment, for example, may comprise

S16: further doping the ion-exchanged Li-containing oxide particle described above with Li. As a result, the capacity as an active material can be further increased.

In S16, for example, by bringing a reducing solution comprising Li ions in contact with the Li-containing oxide particle, the Li-containing oxide particle can be doped with Li. A "reducing solution" means a solution having reducing properties, and for example, may be a solution comprising an electrophile. The reducing solution, for example, may be obtained by dissolving an electrophile and a Li source in a solvent. Various organic solvents capable of dissolving an electrophile and a Li source can be adopted as the solvent. For the electrophile, various materials that dissolve in the above solvent can be adopted. The electrophile may be an aromatic organic compound. For the Li source, various materials that generate Li ions when dissolved in the above solvent can be adopted. The Li source may be metallic lithium, or may be a Li compound. The concentrations of the electrophile and the Li ions contained in the reducing solution need only to be appropriately determined in accordance with the target doping amount. The larger the amount of Li ions contained in the reducing solution relative to the amount of the Li-containing transition metal oxide in contact with the reducing solution, the larger the doping amount of Li relative to the Li-containing transition metal oxide tends to be. The molar ratio (electrophile/Li ions) of the electrophile to the Li ions contained in the reducing solution is not particularly limited. The contact form between the reducing solution and the Li-containing oxide particle is not particularly limited. For example, the Li-containing oxide particle may be immersed in the reducing solution. Alternatively, the reducing solution may be sprayed onto the Li-containing oxide particle. The temperature during contact is not particularly limited, heating may or may not be carried out. The Li-containing oxide particle may be immersed in the reducing solution and then stirred. The time of the Li-containing oxide particle being brought into contact with the reducing solution is not particularly limited, and needs only to be appropriately determined in accordance with the target doping amount. The timing of further doping the Li-containing oxide particle with Li may be before providing the protective layer 1ay described above, or may be thereafter.

2.2 S2

In S2, at least a portion of the surface of the active material particle 1a obtained via S1 is covered by a coating portion 1b comprising a sulfide solid electrolyte. The method of coating the active material particle 1a with a sulfide solid electrolyte is not particularly limited. S2 may be carried by any coating apparatus.

In one embodiment, for example, by applying mechanical energy (for example, shear force) to the mixture of the active material particle 1a and the sulfide solid electrolyte, the surface of the active material particle 1a may be coated with the sulfide solid electrolyte. The coating of the surface of the active material particle 1a with the sulfide solid electrolyte may be carried out by a dry method, or may be carried out by a wet method. Specifically, by loading a mixture of the active material particle 1a and the sulfide solid electrolyte into a container and applying a shear force to the mixture by rotation of a rotor, the surface of the active material particle 1a can be coated with the sulfide solid electrolyte. By controlling the rotational speed and operating time of the rotor, the coverage of the coating portion 1b relative to the surface of the active material particle 1a can be controlled. As described below, in the present embodiment, by mixing the composite active material 1 with a conductive aid after the composite active material 1 is manufactured, an electrode mixture can be obtained. In other words, the mixture in S2, for example, comprises the active material particle 1a and the sulfide solid electrolyte, but does not comprise a conductive aid or a binder. The mixture in S2 may comprise only the active material particle 1a and the sulfide solid electrolyte, or may comprise only the active material particle 1a, the sulfide solid electrolyte, and a dispersion medium (solvent and optional additive).

### 3. Electrode mixture

The composite active material 1, for example, can constitute an electrode mixture together with additional materials. For example, the electrode mixture according to one embodiment may comprise the composite active material 1, an electrolyte, a conductive aid, and a binder. The electrode mixture may optionally comprise other additives. The content of each of the active material, electrolyte, conductive aid, and binder in the electrode mixture needs only to be appropriately determined in accordance with the target battery performance. For example, when the entire solid content contained in the electrode mixture is 100% by mass, the content of the active material (active material derived from the composite active material 1 and any additional active material) may be 40% by mass or greater and less than 100% by mass, and the total content of the conductive aid, binder, and solid electrolyte may be greater than 0% by mass and 60% by mass or less. The content of the active material in the electrode mixture may be 50% by mass or greater, 60% by mass or greater, 70% by mass or greater, or 80% by mass or greater, and may be 90% by mass or less. The total content of the conductive aid, binder, and solid electrolyte may be 10% by mass or greater, and may be 50% by mass or less, 40% by mass or less, 30% by mass or less, or 20% by mass or less. These lower limit values and upper limit values may be arbitrarily combined.

### 3.1 Active material

The active material contained in the electrode mixture may consist only of the above composite active material, or may comprise the composite active material 1 and another active material (additional active material). From the viewpoint of further enhancing the effect of the technique of the present disclosure, the proportion of the additional active material to the entire active material contained in the electrode mixture may be a small amount. For example, when the entirety of the active material contained in the electrode mixture is 100% by mass, the content of the active material derived from the above composite active material 1 may be 50% by mass or greater and 100% by mass or less, 60% by mass or greater and 100% by mass or less, 70% by mass or greater and 100% by mass or less, 80% by mass or greater and 100% by mass or less, 90% by mass or greater and 100% by mass or less, 95% by mass or greater and 100% by mass or less, or 99% by mass or greater and 100% by mass or less.

For an additional active material that can be contained in the electrode mixture, any known active material can be adopted as the additional active material. In the electrode mixture, the additional active material may comprise at least one selected from various lithium compounds other than that of the active material particle 1a, elemental sulfur, and sulfur compounds. The lithium compound as the additional active material may be a Li-containing oxide comprising at least one element M; Li; and O. The element M, for example, may be at least one selected from Mn, Ni, Co, Al, Mg, Ca, Sc, V, Cr, Cu, Zn, Ga, Ge, Y, Zr, Sn, Sb, W, Pb, Bi, Fe, and Ti, or may be at least one selected from the group consisting of Mn, Ni, Co, Al, Fe, and Ti. More specifically, the Li-containing oxide as the additional active material may be at least one selected from lithium cobaltate, lithium nickelate, lithium manganate, lithium nickel cobaltate, lithium nickel manganate, lithium cobalt manganate, lithium nickel-cobalt-manganese oxide ($Li_{1\pm\alpha}Ni_xCo_yMn_zO_{2\pm\delta}$ (for example, $0 < x < 1$, $0 < y < 1$, $0 < z < 1$, and $x + y + z = 1$)), spinel-based lithium compounds (heteroelement-substituted Li-Mn spinels having a composition represented by $Li_{1+x}Mn_{2-x-y}M_yO_4$ (M is one or more selected from Al, Mg, Co, Fe, Ni, and Zn)), lithium nickel-cobalt-aluminum oxide (for example, $Li_{1+\alpha}Ni_pCo_qAl_rO_{2\pm\delta}$ (for example, $p + q + r = 1$)), lithium titanate, and lithium metal phosphate (such as $LiMPO_4$; M is one or more selected from Fe, Mn, Co, and Ni). Particularly, when the additional active material comprises a Li-containing oxide at least comprising, as constituent elements, at least one of Ni, Co, and Mn; Li; and O, higher performance is easily obtained. Alternatively, when the additional active material comprises a Li-containing oxide at least comprising, as constituent elements, at least one of Ni, Co, and Al; Li; and O, higher performance is easily obtained. The additional active material may be of one type used alone, or may be of two or more types used in combination. The shape of the additional active material needs only to be any of general shapes of active materials. The additional active material, for example, may be particulate. The additional active material may be solid, or may have voids therein, for example, may be porous or hollow. The additional active material may be of primary particles, or may be of secondary particles of a plurality of agglomerated primary particles. The average particle diameter D50 of the additional active material, for example, may be 1 nm or more, 5 nm or more, or 10 nm or more, and may be 500 $\mu$m or less, 100 $\mu$m or less, 50 $\mu$m or less, or 30 $\mu$m or less.

### 3.2 Electrolyte

The electrode mixture can comprise the above composite active material 1 and an electrolyte. The electrolyte that can be contained in the electrode mixture may be a solid electrolyte, may be a liquid electrolyte, or may be a combination thereof. Particularly, when the electrode mixture comprises a solid electrolyte, the effect of the technique of the present disclosure is more remarkable.

3.2.1 Solid electrolyte

The solid electrolyte needs only to any known solid electrolyte for batteries. The solid electrolyte mixed with the composite active material 1 in the electrode mixture may be the same as the sulfide solid electrolyte contained in the coating portion 1b of the composite active material 1, or may be different therefrom. The solid electrolyte may be an inorganic solid electrolyte or an organic polymer electrolyte. Particularly, an inorganic solid electrolyte has excellent ion-conducting properties and heat resistance. Examples of the inorganic solid electrolyte include sulfide solid electrolytes, oxide solid electrolytes, and inorganic solid electrolytes having ion-binding properties. Details of the sulfide solid electrolyte, oxide solid electrolyte, and inorganic solid electrolyte having ion-binding properties are as described above. Particularly, when the electrode mixture comprises a sulfide solid electrolyte as the solid electrolyte, higher performance is easily ensured. The sulfide solid electrolyte, for example, may comprise at least Li, S, and P as constituent elements. Alternatively, the electrode mixture may comprise a solid electrolyte having ion-binding properties as the solid electrolyte, and for example, may comprise a solid electrolyte comprising at least Li, Y, and a halogen (at least one of Cl, Br, I, and F) as constituent elements. The solid electrolyte may be amorphous, or may be crystalline. The solid electrolyte may be particulate. The average particle size (D50) of the solid electrolyte, for example, may be 10 nm or more and 10 $\mu$m or less. The solid electrolyte may be of one type used alone, or may be of two or more types used in combination.

3.2.2 Liquid electrolyte

The liquid electrolyte (electrolyte solution) is a liquid comprising lithium ions as carrier ions. The electrolyte solution may be a water-based electrolyte solution or a non-water-based electrolyte solution. The composition of the electrolyte solution needs only to be the same as any known electrolyte solution for lithium-ion secondary batteries. The electrolyte solution may be water or a non-water-based solvent dissolving a lithium salt. Examples of the non-water-based solvent include various carbonate-based solvents. Examples of the lithium salt include lithium amide salts and $LiPF_6$.

3.3 Conductive aid

Examples of the conductive aid that can be contained in the electrode mixture include carbon materials such as vapor-grown carbon fiber (VGCF), acetylene black (AB), Ketjen black (KB), carbon nanotube (CNT), and carbon nanofiber (CNF); and metal materials such as nickel, titanium, aluminum, and stainless steel. The conductive aid, for example, may be particulate or fibrous, and the size thereof is not particularly limited. The conductive aid may be of one type used alone, or may be of two or more types used in combination.

3.4 Binder

Examples of the binder that can be contained in the electrode mixture include butadiene rubber (BR)-based binders, butylene rubber (IIR)-based binders, acrylate-butadiene rubber (ABR)-based binders, styrene-butadiene rubber (SBR)-based binders, polyvinylidene fluoride (PVdF)-based binders, polytetrafluoroethylene (PTFE)-based binders, and polyimide (PI)-based binders. The binder may be of one type used alone, or may be of two or more types used in combination.

3.5 Others

The electrode mixture may comprise various additives, in addition to the above components, for example, a dispersant or a lubricant.

4. Manufacturing method for electrode mixture

The above electrode mixture, for example, can be manufactured by the following method. Specifically, the manufacturing method for an electrode mixture according to one embodiment may comprise at least mixing the composite active material 1, an electrolyte, a conductive aid, and a binder. The means of mixing the composite active material 1, the electrolyte, the conductive aid, and the binder is not particularly limited. For example, the manufacturing method for an electrode mixture may comprise dispersing the composite active material 1, the electrolyte, the conductive aid, and the binder in a solvent to obtain a slurry. The method of mixing the composite active material 1, the electrolyte, the conductive aid, and the binder is completely different from the method of coating the active material particle 1a with a sulfide solid electrolyte in manufacturing the composite active material 1 described above. The "mixing" in the manufacturing method for an electrode mixture merely means homogenizing the dispersion state of the composite active material 1, the electrolyte, the conductive aid, and the binder.

5. Battery

The composite active material 1, for example, can be adopted as a positive electrode active material of a battery. As shown in FIG. 5, the battery 100 according to one embodiment comprises a positive electrode active material layer 10, an electrolyte layer 20, and a negative electrode active material layer 30. The positive electrode active material layer 10 comprises the above composite active material 1 of the present disclosure.

5.1 Positive electrode active material layer

The positive electrode active material layer 10 comprises at least the above composite active material 1 of the present disclosure, and may further comprise an electrolyte, a conductive aid, and a binder. Further, the positive electrode active material layer 10 may additionally comprise various additives. In other words, the positive electrode active material layer 10 can be composed of the above electrode mixture. The shape of the positive electrode active material layer 10 is not particularly limited, and for example, may be a sheet-like positive electrode active material layer 10 having a substantially flat surface. The thickness of the positive electrode active material layer 10 is not particularly limited, and for example, may be 0.1 $\mu$m or more or 1 $\mu$m or more, and may be 2 mm or less or 1 mm or less.

5.2 Electrolyte layer

The electrolyte layer 20 is arranged between the positive electrode active material layer 10 and the negative electrode active material layer 30. The electrolyte layer 20 comprises at least an electrolyte. The electrolyte layer 20 may comprise at least one of a solid electrolyte and an electrolyte solution, and may further optionally comprise a binder. Particularly, when the electrolyte layer 20 comprises a solid electrolyte, higher performance is easily ensured. The contents of the electrolyte and the binder in the electrolyte layer 20 are not particularly limited. Alternatively, the electrolyte layer 20 may comprise a separator for retaining an electrolyte solution and preventing contact between the positive electrode active material layer 10 and the negative electrode active material layer 30. The thickness of the electrolyte layer 20 is not particularly limited, and for example, may be 0.1 $\mu$m or more or 1 $\mu$m or more, and may be 2 mm or more or 1 mm or less.

The electrolyte layer 20 may consist of one layer, or may consist of a plurality of layers. For example, the electrolyte layer 20 may be provided with a first layer arranged on the positive electrode active material layer 10 side and a second layer arranged on the negative electrode active material layer 30 side, wherein the first layer may comprise a first electrolyte and the second layer may comprise a second electrolyte. The first electrolyte and the second electrolyte may be of different types from each other. The first electrolyte and the second electrolyte may each be at least one selected from the above oxide solid electrolytes, sulfide solid electrolytes, and solid electrolytes having ion-binding properties. For example, the first layer may comprise a solid electrolyte having ion-binding properties, and the second layer may comprise at least one of a solid electrolyte having ion-binding properties and a sulfide solid electrolyte.

The electrolyte contained in the electrolyte layer 20 needs only to be appropriately selected from among ones (solid electrolytes and/or liquid electrolytes) exemplified as an electrolyte that can be contained in the positive electrode active material layer 10 (electrode mixture) described above. The binder that can be contained in the electrolyte layer 20 needs only to be appropriately selected from among ones exemplified as a binder that can be contained in the positive electrode active material layer described above. The electrolyte and the binder may each be of one type used alone, or may be of two or more types used in combination. The separator needs only to be a commonly used separator in batteries. Examples thereof include those made of resins such as polyethylene (PE), polypropylene (PP), polyester, and polyamide. The separator may be of a single-layer structure, or may be of a multilayer structure. Examples of separators having a multilayer structure can include separators of a PE/PP two-layer structure and separators of a PP/PE/PP or PE/PP/PE three-layer structure. The separator may consist of a nonwoven fabric such as cellulose nonwoven fabric, resin nonwoven fabric, or glass-fiber nonwoven fabric.

5.3 Negative electrode active material layer

The negative electrode active material layer 30 comprises at least a negative electrode active material. The negative electrode active material layer 30 may optionally comprise an electrolyte, a conductive aid, a binder, and various additives. The content of each component in the negative electrode active material layer 30 needs only to be appropriately determined in accordance with the target battery performance. For example, when the entire solid content of the negative electrode active material layer 30 is 100% by mass, the content of the negative electrode active material may be 40% by mass or greater, 50% by mass or greater, 60% by mass or greater, or 70% by mass or greater, and may be 100% by mass or less, less than 100% by mass, 95% by mass or less, or 90% by mass or less. Alternatively, when the entire negative electrode active material layer 30 is 100% by volume, the negative electrode active material and optionally the electrolyte, conductive aid, and binder in total may be contained at 85% by volume or greater, 90% by volume or greater, or 95% by volume or greater, and the remaining portion may be voids or additional components. The shape of the negative electrode active material layer 30 is not particularly limited, and for example, may be a sheet having a substantially flat surface. The thickness of the negative electrode active material layer 30 is not particularly limited, and for example, may be 0.1 $\mu$m or more, 1 $\mu$m or more, 10 $\mu$m or more, or 30 $\mu$m or more, and may be 2 mm or less, 1 mm or less, 500 $\mu$m or less, or 100 $\mu$m or less.

Any known negative electrode active material for batteries can be adopted as the negative electrode active material. Of known active materials, various materials having a low electric potential (charge and discharge potentials) for storing and releasing carrier ions compared to the above positive electrode active material can be adopted. For example, silicon-based active materials such as Si, Si alloys, and silicon oxides; carbon-based active materials such as graphite and hard carbon; various oxide-based active materials such as lithium titanate; and metallic lithium and lithium alloys can be adopted. Of these, when the negative electrode active material layer 30 comprises Si as a negative electrode active material, performance of the battery 100 is easily enhanced. The negative electrode active material may be of one type used alone, or may be of two or more types used in combination. The shape of the negative electrode active material needs only to be any general shapes of negative electrode active materials of batteries. For example, the negative electrode active material may be particulate. The negative electrode active material particles may be primary particles, or may be secondary particles of a plurality of agglomerated primary particles. The average particle diameter (D50) of the negative electrode active material particles, for example, may be 1 nm or more, 5 nm or more, or 10 nm or more, and may be 500 $\mu$m or less, 100 $\mu$m or less, 50 $\mu$m or less, or 30 $\mu$m or less. Alternatively, the negative electrode active material may be sheet-like (foil-like or membranous), such as a lithium foil. Specifically, the negative electrode active material layer 30 may consist of a sheet of negative electrode active material.

The electrolyte that can be contained in the negative electrode active material layer 30, for example, includes the solid electrolytes and electrolyte solutions described above, and combinations thereof. The conductive aid that can be contained in the negative electrode active material layer 30, for example, needs only to be appropriately selected from among ones exemplified as a conductive aid that can be contained in the positive electrode active material layer 10 (electrode mixture 5) described above. The binder that can be contained in the negative electrode active material layer 30, for example, needs only to be appropriately selected from among one exemplified as a binder that can be contained in the positive electrode active material layer 10 (electrode mixture 5) described above. The electrolyte, the conductive aid, and the binder may each be of one type used alone, or may be of two or more types used in combination.

5.4 Positive electrode current collector

As shown in FIG. 5, the battery 100 may be provided with a positive electrode current collector 40 in contact with the positive electrode active material layer 10. Any general positive electrode current collector for batteries can be adopted as the positive electrode current collector 40. The positive electrode current collector 40 may have at least one shape selected from foil-like, tabular, mesh-like, punched metal-like, and a foam. The positive electrode current collector 40 may comprise a metal foil or a metal mesh. Alternatively, the positive electrode current collector 40 may comprise a layer consisting of a resin composition comprising a resin and conductive material. Alternatively, the positive electrode current collector 40 may comprise a combination of two or more of a metal foil, a metal mesh, and a layer consisting of a resin composition. The positive electrode current collector 40 may consist of a plurality of foils or sheets. Examples of metals constituting the metal foil acting as the positive electrode current collector 40 include at least one selected from Cu, Ni, Cr, Au, Pt, Ag, Al, Fe, Ti, Zn, Co, V, Mg, Pg, Ge, In, Sn, Zr, and stainless steel. Particularly, from the viewpoint of ensuring oxidation resistance, the positive electrode current collector 40 may comprise Al. The positive electrode current collector 40 may have on the surface thereof some coating layer for the purpose of adjusting resistance. For example, the positive electrode current collector 40 may have a carbon coating layer. The positive electrode current collector 40 may be a metal foil or substrate plated or vapor-deposited with a metal described above. When the positive electrode current collector 40 consists of a plurality of metal foils, there may be some layer between the plurality of metal foils. The thickness of the positive electrode current collector 40 is not particularly limited, and for example, may be 0.1 $\mu$m or more or 1 $\mu$m or more, and may be 1 mm or less or 100 $\mu$m or less.

5.5 Negative electrode current collector

As shown in FIG. 5, the battery 100 may be provided with a negative electrode current collector 50 in contact with the negative electrode active material layer 30. Any general negative electrode current collector for batteries can be adopted as the negative electrode current collector 50. The negative electrode current collector 50 may be foil-like, tabular, mesh-like, punched metal-like, or a foam. The negative electrode current collector 50 may be a metal foil or a metal mesh. Alternatively, the negative electrode current collector 50 may comprise a layer consisting of a resin composition comprising a resin and a conductive material. Alternatively, the negative electrode current collector 50 may comprise a carbon sheet. Alternatively, the negative electrode current collector may comprise a combination of two or more of a metal foil, a metal mesh, a resin composition, and a carbon sheet. The negative electrode current collector 50 may consist of a plurality of foils or sheets. Metals constituting the metal foil as the negative electrode current collector 50 include at least one selected from Cu, Ni, Cr, Au, Pt, Ag, Al, Fe, Ti, Zn, Co, V, Mg, Pb, Ge, In, Sn, Zr, and stainless steel. Particularly, from the viewpoint of ensuring reduction resistance and the viewpoint of making alloying with lithium difficult, the negative electrode current collector 50 may comprise at least one metal selected from Cu, Ni, and stainless steel. The negative electrode current collector 50 may have on the surface thereof some coating layer for the purpose of adjusting resistance. For example, the negative electrode current collector 50 may have a carbon coating layer. The negative electrode current collector 50 may be an aluminum foil having a carbon coating layer. The negative electrode current collector 50 may be a metal foil or a substrate plated or vapor-deposited with a metal described above. When the negative electrode current collector 50 consists of a plurality of metal foils, there may be some layer between the plurality of metal foils. The thickness of the negative electrode current collector 50 is not particularly limited, and for example, may be 0.1 $\mu$m or more or 1 $\mu$m or more, and may be 1 mm or less or 100 $\mu$m or less.

## 5.6 Additional configurations

The battery 100, in addition to the above configurations, may be provided with any general configuration as a battery, for example, tabs or terminals. The above configurations of the battery 100 may each be housed inside an outer packaging. Any known outer packaging can be adopted as the outer packaging of the battery. In addition, a plurality of batteries 100 may be optionally connected electrically and optionally stacked to form a battery pack. In this case, the battery pack may be housed inside a known battery case. Examples of shapes of the battery 100 can include coin-type, laminate-type, cylindrical, and rectangular. The battery 100 may be a secondary battery. The battery 100 may be an all-solid battery comprising substantially no liquid electrolyte.

## 6. Manufacturing method for battery

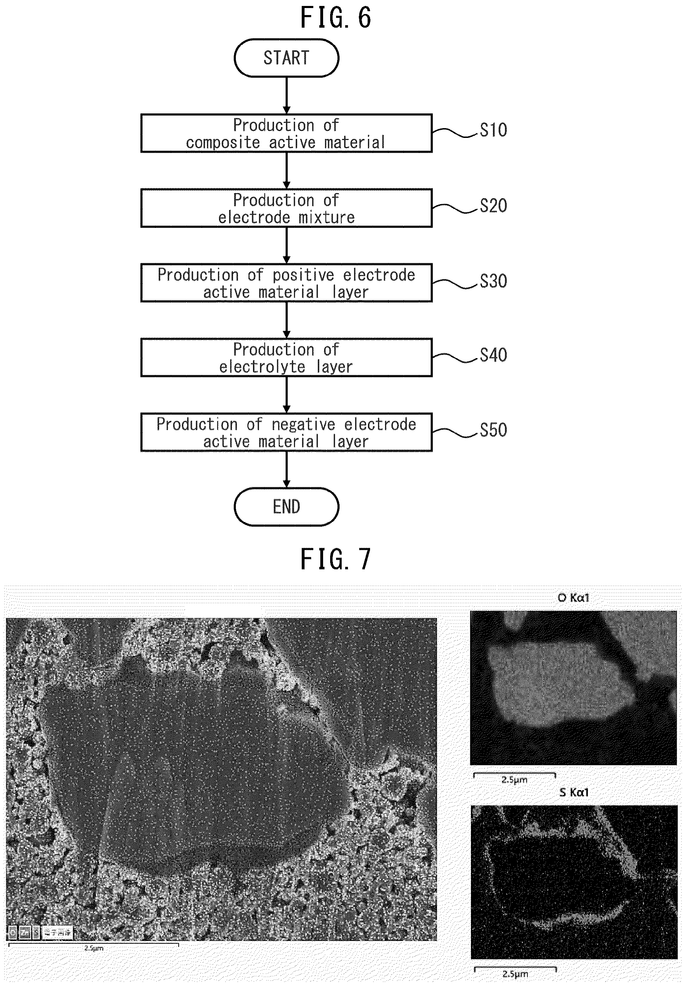

The battery 100, except for obtaining the electrode mixture using the above specific composite active material 1, can be manufactured by applying any known method. As shown in FIG. 6, the manufacturing method for a battery 100 according to one embodiment may comprise S10: manufacturing a composite active material 1 by the method of the present disclosure described above,

S20: mixing at least the composite active material 1, an electrolyte, a conductive aid, and a binder to obtain an electrode mixture,
S30: using the electrode mixture to obtain a positive electrode active material layer 10,
S40: obtaining an electrolyte layer 20 comprising an electrolyte, and
S50: obtaining a negative electrode active material layer 30 comprising a negative electrode active material.

The order of S30, S40, and S50 is not particularly limited. In one embodiment, the battery 100, for example, can be manufactured as follows. However, the manufacturing method for a battery 100 is not limited to the following method, and each layer may be formed by, for example, dry molding.

(1) A composite active material 1 constituting a positive electrode active material layer is dispersed in a solvent to obtain a positive electrode layer slurry. The solvent used in this case is not particularly limited, and water and various organic solvents can be used. The positive electrode layer slurry is then applied on a surface of a positive electrode current collector using a doctor blade, followed by drying, whereby a positive electrode active material layer is formed on the surface of the positive electrode current collector to obtain a positive electrode.
(2) A negative electrode active material constituting a negative electrode active material layer is dispersed in a solvent to obtain a negative electrode layer slurry. The solvent used in this case is not particularly limited, and water and various organic solvents can be used. The negative electrode layer slurry is then applied on a surface of a negative electrode current collector using a doctor blade, followed by drying, whereby a negative electrode active material layer is formed on the surface of the negative electrode current collector to obtain a negative electrode.
(3) Layers are laminated so that an electrolyte layer (solid electrolyte layer or separator) is interposed between the negative electrode and the positive electrode to obtain a laminated body comprising a negative electrode current collector, a negative electrode active material layer, an electrolyte layer, a positive electrode active material layer, and a positive electrode current collector in this order. Additional members such as terminals are attached to the laminated body as needed.
(4) The laminated body is housed in a battery case, and in the case of an electrolyte solution battery, the battery is filled with an electrolyte solution inside the battery case so that the laminated body is immersed in the electrolyte solution, and then the laminated body is sealed within the battery case, whereby a secondary battery is obtained. Note that in the case of an electrolyte solution battery, the electrolyte solution may be contained in the negative electrode active material layer, the separator, and the positive electrode active material layer in step (3) above.

7. Vehicle

The battery of the present disclosure has high capacity and low resistance by using the composite active material 1. Such a battery, for example, can be suitably used in at least one type of vehicle selected from hybrid vehicle (HEV), plug-in hybrid vehicle (PHEV), and battery electric vehicle (BEV). Specifically, the technique of the present disclosure has an aspect of a vehicle comprising a battery, wherein the battery comprises a positive electrode active material layer, an electrolyte layer, and a negative electrode active material layer, and the positive electrode active material layer comprises the above composite active material 1 of the present disclosure.

EXAMPLES

From the foregoing, one embodiment of the composite active material has been described. However, various modifications to the technique of the present disclosure other than the above embodiments are possible without departing from the spirit thereof. Hereinafter, the technique of the present disclosure will be further described in detail with reference to the Examples. However, the technique of the present disclosure is not limited to the following Examples.

1. Preparation of evaluation active material

1.1 Examples 1 and 2

In the following procedure, composite active materials according to Examples 1 and 2 were produced.

1.1.1 Production of precursor particles

(1) $MnSO_4 \cdot 5H_2O$, $NiSO_4 \cdot 6H_2O$, and $CoSO_4 \cdot 7H_2O$ were weighed to a target compositional ratio (Mn:Ni:Co = 4:2:4) and dissolved in distilled water to a concentration of 1.2 mol/L to obtain a first solution. In a separate container, $Na_2CO_3$ was dissolved in distilled water to a concentration of 1.2 mol/L to obtain a second solution.
(2) 1000 mL of pure water was loaded into a reactor (with baffles), and 500 mL of the first solution and 500 mL of the second solution were each added therein dropwise at a rate of about 4 mL/min.
(3) Upon completion of the dropwise addition, stirring was carried out a stirring rate of 150 rpm at room temperature for 1 h to obtain a product.
(4) The product was washed with pure water and subjected to solid-liquid separation with a centrifugal separator to recover a precipitate.
(5) The resulting precipitate was dried overnight at 120°C and pulverized with a mortar, coarse particles were removed by airflow classification, and precursor particles were obtained.

1.1.2 Production of mixture (composite)

The precursor particles and $Na_2CO_3$ were mixed using a mortar, thereby covering the surfaces of the precursor particles with $Na_2CO_3$ and obtaining a mixture (composite).

1.1.3 Production of P2-type Na-containing oxide particle

The above mixture (composite) was loaded into an alumina crucible and fired in an ambient air atmosphere to obtain a Na-containing oxide having a P2-type structure. The firing conditions were as described in the following (1) to (6).

(1) An alumina crucible containing above composite was set in a heating furnace in an ambient air atmosphere.
(2) Temperature inside the heating furnace was raised from room temperature (25°C) to 600°C in 120 min.
(3) Temperature inside the heating furnace was kept at 600°C for 360 min to carry out pre-firing.
(4) After pre-firing, temperature inside the heating furnace was raised to 900°C in 100 min.
(5) Temperature inside the heating furnace was kept at 900°C for 120 min to carry out main firing.
(6) After main firing, temperature inside the heating furnace was lowered from the main firing temperature to 250°C, the alumina crucible was removed from the heating furnace at 250°C, and was left to cool outside the furnace in a dry atmosphere to reach 25°C in 10 min.

The fired product after leaving to cool was pulverized using a mortar in a dry atmosphere to obtain Na-containing oxide particles (P2-type particles) having a P2-type structure. The Na-containing oxide particles were tabular particles having an aspect ratio of 1.2 or greater in the cross-section.

1.1.4 Ion exchange

(1) $LiNO_3$ and LiCl were weighed to a molar ratio of 50:50 and mixed with the above P2-type particles at a molar ratio 10 times the minimum Li amount required for ion exchange to obtain a mixture.
(2) An alumina crucible was used to carry out ion exchange at 280°C for 1 h in an ambient air atmosphere to obtain a product comprising a Li-containing oxide.
(3) Salt remaining in the product was washed away with pure water and the product was subjected to solid-liquid separation by vacuum filtration to obtain a precipitate.
(4) The resulting precipitate was dried overnight at 120°C to obtain Li-containing oxide particles having an O2-type structure.

1.1.5 Protective layer coating

(1) 4.52 g of metaphosphoric acid (manufactured by Fujifilm Wako Pure Chemical Industries, Ltd.) was dissolved in 191.8 g of ion-exchanged water. Boric acid (manufactured by Nacalai Tesque, Inc.) was then added and dissolved so as to obtain a molar ratio (B/P) of 1.0. Lithium hydroxide monohydrate (manufactured by Fujifilm Wako Pure Chemical Industries, Ltd.) was further added and stirred so as to obtain a molar ratio (Li/(P + B)) of 1.00. As a result, a coating liquid comprising a Li source, a P source, and a B source was obtained.
(2) The above Li-containing oxide particles were mixed into the coating liquid to obtain a slurry.
(3) The slurry was dried using a spray drying apparatus to obtain a solid component.
(4) The solid component was heat-treated at 200°C for 5 h in an ambient air atmosphere. As a result, the surfaces of the active material particles were covered with a protective layer. The protective layer comprises, as constituent elements, Li, B, P, and O.

1.1.6 Li doping

(1) 9-Fluorenone was mixed and dissolved in tetrahydrofuran (THF) inside a glove box (Ar atmosphere) to obtain a fluorenone solution.
(2) Li foil was added in the fluorenone solution and stirred for 2 h to obtain a reducing solution comprising Li ions.
(3) The protective layer-coated Li-containing oxide particles were added, immersed, and stirred for 24 h in the obtained reducing solution.
(4) The particles after stirring were washed with THF and subjected to solid-liquid separation by vacuum filtration. The resulting precipitate was dried overnight at 120°C to obtain active material particles.

The crystal phase contained in the active material particles was confirmed by XRD, where the active material particles had an O2-type structure. The active material particles were tabular particles having an aspect ratio of 1.2 or greater in the cross-sectional shape. The cross-sectional observation method is as described in the embodiments of the specification of the present application.

1.1.7 Sulfide solid electrolyte coating

The above active material particles and a sulfide solid electrolyte ($Li_2S$-$P_2S_5$-based sulfide solid electrolyte) were loaded in a coating apparatus (Nobilta®, manufactured by Hosokawa Micron Group), and the apparatus was operated to generate a shear force within the apparatus, thereby covering the surfaces of the active material particles with the sulfide solid electrolyte and obtaining an evaluation composite active material. By changing the shear force, two types of composite active materials each having a different coverage of the sulfide solid electrolyte were obtained. In Example 1, the shear force was made relatively large, and in Example 2, the shear force was made relatively small.

1.2 Comparative Example 1

The tabular active material particles, without having a sulfide solid electrolyte coating applied thereto, were used for evaluation as they were.

1.3 Comparative Example 2

Precursor particles were obtained in the same manner as in Examples 1 and 2. The obtained precursor particles were subjected to the following treatment, thereby obtaining a mixture (composite).

(1) $Na_2CO_3$ and distilled water were weighed to 1150 g/L and then stirred until complete dissolution using a stirrer to produce a $Na_2CO_3$ aqueous solution.
(2) The above $Na_2CO_3$ aqueous solution and the above precursor particles were mixed to obtain a slurry.
(3) The above slurry was gas-flow dried by spray drying to obtain a second mixture (second composite). Specifically, using a spray drying apparatus DL410, under the conditions of a slurry feed rate of 30 mL/min, an inlet temperature of 200°C, a circulating air volume of 0.8 m$^3$/min, and a spraying air pressure of 0.3 MPa, the above slurry was gas-flow dried to cover the surfaces of the precursor particles with $Na_2CO_3$ to obtain a mixture (composite).

The obtained mixture (composite) was heated and subjected to pre-firing under the same conditions as in Examples 1 and 2. After pre-firing, temperature within the heating furnace was raised to 800°C in 100 min, and the inside of the heating furnace was kept at 800°C for 60 min to carry out main firing. Thereafter, cooling was carried out under the same conditions as in Examples 1 and 2, and Na-containing oxide particles having a P2-type structure (P2-type particles) were obtained. The Na-containing oxide particles were spherical particles having an aspect ratio of less than 1.2 in the cross-sectional shape.

The obtained spherical Na-containing oxide particles were used to carry out ion exchange, protective layer coating, and Li doping under the same conditions as in Examples 1 and 2 to obtain active material particles. The crystal phase contained in the active material particles was confirmed by XRD, where the active material particles had an O2-type structure. The active material particles were spherical particles having an aspect ratio of less than 1.2 in the cross-sectional shape.

A sulfide solid electrolyte coating was applied to the obtained spherical active material particles, under the same conditions as in Example 2, to obtain an evaluation composite active material.

1.4 Comparative Example 3

The spherical active material particles, without having a sulfide solid electrolyte coating applied thereto, were used for evaluation as they were.

2. Measurement of coverage

Cross-sectional observation of the composite active material was carried out to determine coverage of the sulfide solid electrolyte relative to the surfaces of the active material particles. The cross-sectional observation method is as described in the embodiments of the specification of the present application. SEM-EDS images of the composite active material according to Example 1 is shown in FIG. 7. From FIG. 7, it was found that the composite active material according to Example 1 is one in which the surfaces of tabular active material particles is coated with the sulfide solid electrolyte. Except that the coverage differed, Example 2 had the same form.

3. Production of evaluation cell

(1) The evaluation active material described above, an argyrodite-type sulfide solid electrolyte, vapor-grown carbon fiber (VGCF), and a PVdF-based binder were weighed so as to obtain, in mass ratio, active material : sulfide solid electrolyte : VGCF : binder = 81:16:1:2. When a composite active material to which a sulfide solid electrolyte coating had been applied was used, the argyrodite-type sulfide solid electrolyte was added while taking into consideration the amount of the sulfide solid electrolyte constituting the composite active material so as to obtain a mass ratio of the active material to the sulfide solid electrolyte (sulfide solid electrolyte in the coating + argyrodite-type sulfide solid electrolyte) of 81:16. The weighed components were dispersed and mixed in DIBK, thereby obtaining a positive electrode slurry. The positive electrode slurry was applied onto an Al foil acting as a positive electrode current collector by a blade method, and this was dried on a hot plate to form a positive electrode active material layer on the Al foil.

(2) Lithium titanium oxide (LTO) as a negative electrode active material, an argyrodite-type sulfide solid electrolyte, VGCF, and a PVdF-based binder were weighed so as to obtain a ratio of negative electrode active material : sulfide-based solid electrolyte : VGCF : binder = 72:23:3:2, and dispersed and mixed in butyl butyrate, thereby obtaining a negative electrode slurry. The negative electrode slurry was applied onto a Ni foil acting as a negative electrode current collector by a blade method, and this was dried on a hot plate to form a negative electrode active material layer on the Ni foil.

(3) An argyrodite-type sulfide solid electrolyte, a PVdF-based binder, and butyl butyrate were stirred by an ultrasonic dispersion apparatus to obtain a solid electrolyte slurry. The mass ratio of the argyrodite-type sulfide solid electrolyte to the PVdF-based binder was 99.4:0.6. The solid electrolyte slurry was applied onto an Al foil acting as a substrate by a blade method, and this was dried on a hot plate at 100°C for 30 min to obtain a peelable solid electrolyte layer.

(4) The above positive electrode active material layer and solid electrolyte layer were laminated and pressed with a roll press at a press pressure of 50 kN/cm and a temperature of 160°C, and then the Al foil was peeled from the solid electrolyte layer and the laminate was punched out to a size of 1 cm$^2$, thereby obtaining a positive electrode laminated body.

(5) The above negative electrode active material layer and solid electrolyte layer were laminated and pressed with a roll press at a press pressure of 50 kN/cm and a temperature of 160°C, and then the Al foil was peeled from the solid electrolyte layer to obtain a negative electrode laminated body. Further, an additional solid electrolyte layer was laminated to the solid electrolyte side of the negative electrode laminated body above and pre-pressed with a flat uniaxial press at a pressure of 100 MPa and a temperature of 25°C, and then the Al foil was peeled from the solid electrolyte layer and the laminate was punched out to a size of 1.08 cm$^2$, thereby obtaining a negative electrode laminated body having an additional solid electrolyte layer.

(6) The positive electrode laminated body above and the negative electrode laminated body having an additional solid electrolyte layer were laminated so that the mixture surfaces overlapped, and were pressed with a flat uniaxial press at a press pressure of 200 MPa and a temperature of 120°C to obtain a battery laminated body.

(7) The battery laminated body above were interposed between two restraining plates, the two restraining plates were fastened by a fastener at a restraining pressure of 5 MPa to fix the distance between the two restraining plates, and an evaluation cell was obtained.

4. Measurement of capacity

The evaluation cell was charged and discharged at 0.1 C (1 C = 220 mA/g) with a voltage range of 0.45 to 3.25 V in an isothermal chamber kept at 25°C, and the initial discharge capacity was measured.

5. Measurement of resistance

The evaluation cell, in an isothermal chamber kept at 25°C, was charged at 0.1 C (1 C = 220 mA/g) with a voltage range of 0.45 to 3.25 V, then discharged until reaching SOC 80%, and after SOC 80% was reached, discharged at 3.0 C for 10 s, and the 5-s resistance value at SOC 80% was measured. The evaluation cell was further discharged until reaching SOC 50%, and after SOC 50% was reached, discharged at 3.0 C for 10 s, and the 5-s resistance value at SOC 50% was measured.

6. Evaluation results

In Table 1 below, the crystal structure, chemical composition, particle shape, presence of a sulfide solid electrolyte coating (SSE coating), and coverage of the sulfide solid electrolyte coating of each of the active materials of Examples 1 and 2 and Comparative Examples 1 to 3 are indicated. In Table 2 below, the initial discharge capacity, 5-s resistance value at SOC 50%, and 5-s resistance value at SOC 80% for each of the evaluation cells using the respective active materials of Examples 1 and 2 and Comparative Examples 1 to 3 are indicated.

TABLE 1

(Table 1)

|  | Crystal structure | Chemical composition | Shape | Presence of SSE coating | Coverage (%) |
|---|---|---|---|---|---|
| Example 1 | O2 | $Li_{1.0}Mn_{0.4}Ni_{0.2}Co_{0.4}O_2$ | Tabular | Yes | 89 |
| Example 2 | O2 | $Li_{1.0}Mn_{0.4}Ni_{0.2}Co_{0.4}O_2$ | Tabular | Yes | 17 |
| Comparative Example 1 | O2 | $Li_{1.0}Mn_{0.4}Ni_{0.2}Co_{0.4}O_2$ | Tabular | No | 0 |
| Comparative Example 2 | O2 | $Li_{1.0}Mn_{0.4}Ni_{0.2}Co_{0.4}O_2$ | Spheric al | Yes | 23 |
| Comparative Example 3 | O2 | $Li_{1.0}Mn_{0.4}Ni_{0.2}Co_{0.4}O_2$ | Spheric al | No | 0 |

TABLE 2

(Table 2)

|  | Initial discharge capacity (mAh/g) | SOC 50% 5-s resistance value ($\Omega$) | SOC 80% 5-s resistance value ($\Omega$) |
|---|---|---|---|
| Example 1 | 227 | 28 | 32 |
| Example 2 | 227 | 28 | 36 |
| Comparative Example 1 | 226 | 33 | 47 |
| Comparative Example 2 | 197 | 29 | 40 |
| Comparative Example 3 | 195 | 24 | 33 |

From the results shown in Tables 1 and 2, the following was found.

(1) From the results of Examples 1 and 2 and Comparative Example 1, in the tabular active material particle having an O2-type structure, when a sulfide solid electrolyte coating was applied to the surface thereof, high capacity was maintained while resistance decreased.

(2) From the results of Comparative Examples 2 and 3, in the spherical active material particle having an O2-type structure, even when a sulfide solid electrolyte coating was applied to the surface thereof, resistance did not decrease but instead increased. Compared to the tabular active material particle having an O2-type structure, discharge capacity was decreased.

In the above Examples, evaluation active materials having a predetermined chemical composition were exemplified. However, the chemical composition of the active material is not limited thereto. It is considered that the same effect is brought about when an active material comprises, as constituent elements, at least one transition metal element among Mn, Ni, and Co.

7. Conclusion

From the above results, it can be said that the following composite active material has high capacity and low resistance.

A composite active material, comprising an active material particle and a coating portion, wherein

the active material particle has an O2-type structure,
the active material particle comprises, as constituent elements,
Li,
at least one transition metal element among Mn, Ni, and Co, and
O, and
the active material particle is tabular,
the coating portion covers at least a portion of a surface of the active material particle, and the coating portion comprises a sulfide solid electrolyte.

REFERENCE SIGNS LIST

1       composite active material
1a      active material particle
1ax     active material portion
1ay     protective layer
1b      coating portion
100     battery
10      positive electrode active material layer
20      electrolyte layer
30      negative electrode active material layer
40      positive electrode current collector
50      negative electrode current collector

**Claims**

1. A composite active material, comprising an active material particle and a coating portion, wherein

   the active material particle has an O2-type structure,
   the active material particle comprises, as constituent elements,

   Li,
   at least one transition metal element among Mn, Ni, and Co, and
   O,

   the active material particle is tabular,
   the coating portion covers at least a portion of a surface of the active material particle, and
   the coating portion comprises a sulfide solid electrolyte.

2. The composite active material according to claim 1, wherein
   coverage of the coating portion relative to the surface of the active material particle is 50% or greater.

3. The composite active material according to claim 1 or 2, wherein

   the active material particle comprises a protective layer on a surface thereof, wherein
   at least a portion of a surface of the protective layer is covered by the coating portion, and the protective layer comprises, as constituent elements, Li, B, P, and O.

4. The composite active material according to any one of claims 1 to 3, wherein
   the active material particle comprises, as constituent elements, Li, Mn, Ni, Co, and O.

5. The composite active material according to any one of claims 1 to 4, wherein
   an active material constituting the active material particle has a chemical composition represented by $Li_aNa_bMn_{x-p}Ni_{y-q}Co_{z-r}M_{p+q+r}O_2$ (where $0 < a \leq 1.40$; $0 \leq b \leq 0.20$; $x + y + z = 1$; and $0 \leq p + q + r < 0.17$, and element M is at least one selected from B, Mg, Al, K, Ca, Ti, V, Cr, Fe, Cu, Zn, Ga, Ge, Sr, Y, Zr, Nb, Mo, and W).

6. A battery, comprising a positive electrode active material layer, an electrolyte layer, and a negative electrode active material layer, wherein
   the positive electrode active material layer comprises the composite active material according to any one of claims 1 to 5.

7. The battery according to claim 6, wherein
   the electrolyte layer comprises a solid electrolyte.

8. A manufacturing method for a composite active material, comprising obtaining an active material particle, and

covering at least a portion of a surface of the active material particle with a coating portion, wherein
the active material particle has an O2-type structure,
the active material particle comprises, as constituent elements,

Li,
at least one transition metal element among Mn, Ni, and Co, and
O,

the active material particle is tabular, and
the coating portion comprises a sulfide solid electrolyte.

9. A manufacturing method for a battery, comprising

manufacturing the composite active material by the method according to claim 8,
mixing at least the composite active material, an electrolyte, a conductive aid, and a binder to obtain an electrode mixture,
using the electrode mixture to obtain a positive electrode active material layer,
obtaining an electrolyte layer comprising an electrolyte, and
obtaining a negative electrode active material layer comprising a negative electrode active material.

# FIG. 1

1

# FIG. 2

1a

$D_S$  $D_L$

1ax
1ay

# FIG. 3

Layering of active material particles

Regulus 2.0kV 3.9mm x5.00k SE(U)     10.0μm

# FIG. 4

START

Production of precursor — S11

Production of mixture (composite) — S12

Production of P2-type Na-containing transition metal oxide particles — S13

Ion exchange — S14

Protective layer coating — S15

Li doping — S16

} S1

Sulfide solid electrolyte coating — S2

END

# FIG. 5

## 100

— 40
— 10
— 20
— 30
— 50

# FIG. 6

```
        ( START )
            │
            ▼
┌─────────────────────────┐
│     Production of        │  ─S10
│ composite active material│
└─────────────────────────┘
            │
            ▼
┌─────────────────────────┐
│     Production of        │  ─S20
│   electrode mixture      │
└─────────────────────────┘
            │
            ▼
┌─────────────────────────┐
│Production of positive electrode│  ─S30
│   active material layer  │
└─────────────────────────┘
            │
            ▼
┌─────────────────────────┐
│     Production of        │  ─S40
│    electrolyte layer     │
└─────────────────────────┘
            │
            ▼
┌─────────────────────────┐
│Production of negative electrode│  ─S50
│   active material layer  │
└─────────────────────────┘
            │
            ▼
          ( END )
```

# FIG. 7

Europäisches
Patentamt

European
Patent Office

Office européen
des brevets

**EUROPEAN SEARCH REPORT**

Application Number

EP 25 20 4840

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 113 252 A1 (TOYOTA MOTOR CO LTD [JP]) 4 January 2017 (2017-01-04) | 1,2,4-9 | INV.<br>H01M4/36 |
| Y | * abstract *<br>* example 1 *<br>* figure 7B * | 3 | H01M4/505<br>H01M4/525<br>H01M10/0525<br>H01M10/0562 |
| | ----- | | |
| X | US 2024/038972 A1 (YABE HIROKI [JP] ET AL) 1 February 2024 (2024-02-01)<br>* abstract *<br>* examples 1-4 *<br>* figure 2 * | 1,2,4-9 | |
| | ----- | | |
| X | CHRISTOPHER DOERRER: "High Energy Density Single-Crystal NMC/Li 6 PS 5 Cl Cathodes for All-Solid-State Lithium-Metal Batteries",<br>ACS APPLIED MATERIALS & INTERFACES,<br>vol. 13, no. 31, 29 July 2021 (2021-07-29) , pages 37809-37815, XP093157180,<br>United States<br>ISSN: 1944-8244, DOI: 10.1021/acsami.1c07952<br>Retrieved from the Internet:<br>URL:https://pubs.acs.org/doi/pdf/10.1021/a csami.1c07952><br>* abstract *<br>* figure 2 *<br>& Doerrer Christopher ET AL: "Supporting Information: High Energy Density Single Crystal NMC/Li 6 PS 5 Cl Cathodes for All-Solid-State Lithium Metal Batteries", ,<br>29 July 2021 (2021-07-29), XP093371911,<br>Retrieved from the Internet:<br>URL:https://pubs.acs.org/doi/10.1021/acsam i.1c07952<br>* electrode preparation * | 1,2,4-9 | |
| | ----- | | |

| | TECHNICAL FIELDS SEARCHED (IPC) |
|---|---|
| | H01M |

-/--

The present search report has been drawn up for all claims

| Place of search | Date of completion of the search | Examiner |
|---|---|---|
| The Hague | 2 March 2026 | Rosciano, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

# EUROPEAN SEARCH REPORT

**Application Number**

EP 25 20 4840

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JI YONG JUN ET AL: "Li3BO3-Li3PO4 Composites for Efficient Buffer Layer of Sulphide-Based All-Solid-State Batteries", BATTERIES, vol. 9, no. 6, 26 May 2023 (2023-05-26), page 292, XP093371870, Basel ISSN: 2313-0105, DOI: 10.3390/batteries9060292 * abstract * ----- | 3 | |
| | | | **TECHNICAL FIELDS SEARCHED (IPC)** |

The present search report has been drawn up for all claims

| Place of search | Date of completion of the search | Examiner |
|---|---|---|
| The Hague | 2 March 2026 | Rosciano, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 4840

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2026

| Patent document cited in search report | | Publication date | Patent family member(s) | | Publication date |
|---|---|---|---|---|---|
| EP 3113252 | A1 | 04-01-2017 | CN | 106299268 A | 04-01-2017 |
| | | | EP | 3113252 A1 | 04-01-2017 |
| | | | JP | 6269597 B2 | 31-01-2018 |
| | | | JP | 2017016793 A | 19-01-2017 |
| | | | KR | 20170002294 A | 06-01-2017 |
| | | | US | 2016380266 A1 | 29-12-2016 |
| US 2024038972 | A1 | 01-02-2024 | CN | 117476863 A | 30-01-2024 |
| | | | EP | 4325594 A2 | 21-02-2024 |
| | | | JP | 7605795 B2 | 24-12-2024 |
| | | | JP | 2024017161 A | 08-02-2024 |
| | | | KR | 20240015593 A | 05-02-2024 |
| | | | US | 2024038972 A1 | 01-02-2024 |

EPO FORM P0459

For more details about this annex : see Official Journal of the European Patent Office, No. 12/82

**REFERENCES CITED IN THE DESCRIPTION**

**Patent documents cited in the description**

- JP 2022085829 A